# EUROPEAN PATENT APPLICATION

(11) **EP 4 557 862 A1**
(43) Date of publication of application: **21.05.2025**
(21) Application number: 23851302.2
(22) Date of filing: 16.05.2023
(51) Int. Cl.: H04W 72/12

(54) **CELL SCHEDULING METHOD AND APPARATUS**

(30) Priority: 12.08.2022 CN 202210967187
(71) Applicant: Huawei Technologies Co., Ltd., Shenzhen, Guangdong 518129 (CN)
(72) Inventor: HUA, Meng, Shenzhen, Guangdong 518129 (CN); DING, Mengying, Shenzhen, Guangdong 518129 (CN); PENG, Jinlin, Shenzhen, Guangdong 518129 (CN)
(74) Representative: Gill Jennings & Every LLP
(86) International application number: PCT/CN2023/094450
(87) International publication number: WO 2024/032072

(57) **Abstract**

Embodiments of this application provide a cell scheduling method and apparatus. The method includes: A terminal device receives a downlink control information format from a network device; and the terminal device determines, based on a radio network temporary identifier used to scramble the downlink control information format and a first indicator field in the downlink control information format, a first cell group scheduled by the downlink control information format. The radio network temporary identifier belongs to one of at least two radio network temporary identifiers. The at least two radio network temporary identifiers correspond to at least two cell groups. Each of the at least two radio network temporary identifiers corresponds to at least one cell group. The first indicator field is used to determine the first cell group in the at least two cell groups. According to the cell scheduling method and apparatus provided in this application, overheads of the downlink control information format can be reduced.

## Description

This application claims priority to Chinese Patent Application No. 202210967187.7, filed with the China National Intellectual Property Administration on August 12, 2022 and entitled "CELL SCHEDULING METHOD AND APPARATUS", which is incorporated herein by reference in its entirety.

### TECHNICAL FIELD

Embodiments of this application relate to the communication field, and more specifically, to a cell scheduling method and apparatus.

### BACKGROUND

Currently, physical downlink shared channels (physical downlink shared channel, PDSCH) of different cells are separately scheduled by different downlink control information (downlink control information, DCI) formats (formats). Similarly, physical uplink shared channels (physical uplink shared channel, PUSCH) of different cells are also separately scheduled by different DCI formats. When PDSCHs or PUSCHs of a plurality of cells are scheduled, required overheads of the DCI formats are excessively high. Therefore, when the PDSCHs or the PUSCHs of the plurality of cells need to be scheduled, how to reduce the overheads of the DCI formats becomes an urgent problem to be resolved.

### SUMMARY

Embodiments of this application provide a cell scheduling method and apparatus, to reduce overheads of a downlink control information format.

According to a first aspect, a cell scheduling method is provided. The method may be performed by a terminal device, or may be performed by a component (for example, a chip or a circuit) of the terminal device. This is not limited.

The method may include: A terminal device receives a downlink control information format from a network device; and the terminal device determines, based on a radio network temporary identifier used to scramble the downlink control information format and a first indicator field in the downlink control information format, a first cell group scheduled by the downlink control information format. The radio network temporary identifier used to scramble the downlink control information format belongs to one of at least two radio network temporary identifiers, the at least two radio network temporary identifiers correspond to at least two cell groups. Each of the at least two radio network temporary identifiers corresponds to at least one cell group. The first indicator field is used to determine the first cell group in the at least two cell groups.

In the foregoing solution, each of the at least two radio network temporary identifiers corresponds to at least one cell group. A plurality of cells can be scheduled by one downlink control information format by using the first indicator field in the downlink control information format and the radio network temporary identifier used to scramble the downlink control information format. This reduces overheads of the downlink control information format.

Alternatively, the method may include: A terminal device receives downlink control information from a network device; and the terminal device determines, based on a radio network temporary identifier used to scramble the downlink control information and a first indicator field in the downlink control information, a first cell group scheduled by the downlink control information. The radio network temporary identifier used to scramble the downlink control information format belongs to one of at least two radio network temporary identifiers, the at least two radio network temporary identifiers correspond to at least two cell groups. Each of the at least two radio network temporary identifiers corresponds to at least one cell group. The first indicator field is used to determine the first cell group in the at least two cell groups. Further, the downlink control information format is a downlink control information format that can be used to simultaneously schedule data transmissions of a plurality of cells.

With reference to the first aspect, in some implementations of the first aspect, in the at least two radio network temporary identifiers, different radio network temporary identifiers correspond to different cell groups.

In the foregoing solution, different radio network temporary identifiers correspond to different cell groups, so that one downlink control information format can schedule more cells, to further reduce overheads of the downlink control information format.

With reference to the first aspect, in some implementations of the first aspect, the method further includes: The terminal device receives higher layer signaling from the network device, where the higher layer signaling indicates a correspondence between each of the at least two radio network temporary identifiers and the at least one cell group.

According to a second aspect, a cell scheduling method is provided. The method may be performed by a network device, or may be performed by a component (for example, a chip or a circuit) of the network device. This is not limited. For beneficial effect of the second aspect, refer to the first aspect.

The method may include: A network device determines to scramble a downlink control information format by using a radio network temporary identifier corresponding to a first cell group, where the radio network temporary identifier used to scramble the downlink control information format belongs to one of at least two radio network temporary identifiers, the at least two radio network temporary identifiers correspond to at least two cell groups, each of the at least two radio network temporary identifiers corresponds to at least one cell group, and the first cell group belongs to the at least one cell group corresponding to the radio network temporary identifier used to scramble the downlink control information format; the network device determines to indicate, by using a first indicator field included in the downlink control information format, the first cell group in the at least one cell group corresponding to the radio network temporary identifier used to scramble the downlink control information format; and the network device sends the downlink control information format to a terminal device.

With reference to the second aspect, in some implementations of the second aspect, the method further includes: The network device sends higher layer signaling to the terminal device, where the higher layer signaling indicates a correspondence between each of the at least two radio network temporary identifiers and the at least one cell group.

With reference to the second aspect, in some implementations of the second aspect, the downlink control information format further includes a second indicator field. That the network device determines to indicate, by using a first indicator field included in the downlink control information format, the first cell group in the at least one cell group corresponding to the radio network temporary identifier used to scramble the downlink control information format includes: The network device determines to indicate, by using a combination of the first indicator field and the second indicator field, the first cell group in the at least one cell group corresponding to the radio network temporary identifier used to scramble the downlink control information format.

With reference to the first aspect or the second aspect, in some implementations, the at least two radio network temporary identifiers include a first identifier and a second identifier. The first identifier indicates at least one of the following corresponding to the first cell group: dynamic scheduling of a physical downlink data channel or dynamic scheduling of a physical uplink data channel. The second identifier indicates at least one of the following corresponding to the first cell group: activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information.

With reference to the first aspect or the second aspect, in some implementations, the at least two radio network temporary identifiers include a first identifier and a second identifier. The first identifier indicates at least one of the following corresponding to the first cell group: dynamic scheduling of a physical downlink data channel, dynamic scheduling of a physical uplink data channel, a retransmission of a semi-persistent scheduling physical downlink data channel, a retransmission of a semi-persistent scheduling physical uplink data channel, a retransmission of a configured grant physical uplink data channel transmission, or a retransmission of a configured grant physical downlink data channel transmission. The second identifier indicates at least one of the following corresponding to the first cell group: activation or deactivation of a semi-persistent scheduling physical downlink data channel, activation or deactivation of a semi-persistent scheduling physical uplink data channel, activation or deactivation of a configured grant physical uplink data channel transmission, activation or deactivation of a configured grant physical downlink data channel transmission, or activation or deactivation of semi-persistent channel state information.

With reference to the first aspect or the second aspect, in some implementations, one downlink control information format schedules one cell, and the downlink control information format performs at least one of the following scheduling: dynamic scheduling of a transmission of a physical downlink data channel in the cell, dynamic scheduling of a transmission of a physical uplink data channel in the cell, activation or deactivation of a semi-persistent scheduling physical downlink data channel in the cell, activation or deactivation of a semi-persistent scheduling physical uplink data channel in the cell, a retransmission of a semi-persistent scheduling physical downlink data channel in the cell, a retransmission of a semi-persistent scheduling physical uplink data channel in the cell, activation or deactivation of a configured grant physical uplink data channel transmission in the cell, activation or deactivation of a configured grant physical downlink data channel transmission in the cell, a retransmission of a configured grant physical uplink data channel transmission in the cell, a retransmission of a configured grant physical downlink data channel transmission in the cell, or activation or deactivation of semi-persistent channel state information in the cell. One downlink control information format schedules a plurality of cells. The downlink control information format may perform at least one of the foregoing scheduling on one of the plurality of cells, and may perform same or different types of scheduling on any two different cells in the plurality of cells.

With reference to the first aspect or the second aspect, in some implementations, the first cell group includes at least one cell when the radio network temporary identifier used to scramble the downlink control information format is the first identifier; or the first cell group is one cell when the radio network temporary identifier used to scramble the downlink control information format is the second identifier.

In the foregoing solution, when radio network temporary identifiers are different, the first indicator field in the downlink control information format can indicate different cell groups or cells by using a same value. On one hand, a same downlink control information format supports different types of scheduling for the plurality of cells. On the other hand, configuration of different indicator fields in the downlink control information format for different radio network temporary identifiers is avoided, thereby further reducing overheads of the downlink control information format.

With reference to the first aspect or the second aspect, in some implementations, the first indicator field includes K bits, K≥1, and K is an integer. When the radio network temporary identifier used to scramble the downlink control information format is the first identifier, L1 values of the first indicator field respectively correspond to L1 cell groups, each of the L1 cell groups includes at least one cell, and the L1 cell groups include the first cell group, and L1 is an integer. When the radio network temporary identifier used to scramble the downlink control information format is the second identifier, L2 values of the first indicator field respectively correspond to L2 cell groups, and the L2 cell groups include the first cell group, and L2 is an integer. When L1≥L2, 2^{K-1}<L1≤2^{K} and 1≤L2≤2^{K}; or when L1<L2, 1≤L1<2^{K} and 2^{K-1}<L2≤2^{K}.

Further, when the radio network temporary identifier used to scramble the downlink control information format is the first identifier, each of the L1 cell groups includes the at least one cell, that is, each of the L1 cell groups may include one cell or may include a plurality of cells. When the radio network temporary identifier used to scramble the downlink control information format is the second identifier, each of the L2 cell groups is one cell, that is, each of the L2 cell groups includes only one cell.

With reference to the first aspect or the second aspect, in some implementations, that the first indicator field is used to determine the first cell group in the at least two cell groups includes: The first indicator field is used to determine a second cell group in the at least two cell groups, and a correspondence between the second cell group and the first indicator field is indicated by higher layer signaling. The first cell group is the second cell group when the radio network temporary identifier used to scramble the downlink control information format is the first identifier; or the second cell group includes the first cell group when the radio network temporary identifier used to scramble the downlink control information format is the second identifier.

With reference to the first aspect or the second aspect, in some implementations, the downlink control information format further includes a second indicator field, and when the radio network temporary identifier used to scramble the downlink control information format is the second identifier, that the first indicator field is used to determine the first cell group in the at least two cell groups includes: a combination of the first indicator field and the second indicator field is used to determine the first cell group in the second cell group.

In the foregoing solution, when the radio network identifier is the first identifier, the first cell group is determined based on the first indicator field; or when the radio network identifier is the second identifier, the first cell group is determined based on the combination of the first indicator field and the second indicator field. In one aspect, a same downlink control information format supports different types of scheduling for the plurality of cells. In another aspect, when radio network temporary identifiers are different, the first indicator field in the downlink control information format can indicate different cells by using a same value, to further reduce the overheads of the downlink control information format.

According to a third aspect, a cell scheduling method is provided. The method may be performed by a terminal device, or may be performed by a component (for example, a chip or a circuit) of the terminal device. This is not limited.

The method may include: A terminal device receives a first downlink control information format from a network device, where the first downlink control information format is used to schedule a plurality of cells, and a radio network temporary identifier used to scramble the first downlink control information format includes one of the following: a configured scheduling radio network temporary identifier, a group configured scheduling radio network temporary identifier, or a semi-persistent channel state information radio network temporary identifier, or a radio network temporary identifier used to scramble the first downlink control information format corresponds to at least one of the following: activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information; and when a first indicator field in the first downlink control information format indicates at least two cells, the terminal device determines, based on the radio network temporary identifier and the first indicator field, that the first downlink control information format is invalid.

In the foregoing solution, the downlink control information format supports scheduling of a plurality of cells. In a case in which the downlink control information format used to schedule a plurality of cells is scrambled by using the configured scheduling radio network temporary identifier, the group configured scheduling radio network temporary identifier, or the semi-persistent channel state information radio network temporary identifier, or in a case in which the downlink control information format used to schedule a plurality of cells is scrambled by using a radio network temporary identifier corresponding to one of the following: activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information, the downlink control information format does not support scheduling of more than one cell, that is, scheduling of only one cell is supported. Different types of scheduling for a plurality of cells are supported by one downlink control information format by using the first indicator field in the downlink control information format and the radio network temporary identifier. This reduces overheads of the downlink control information format.

According to a fourth aspect, a cell scheduling method is provided. The method may be performed by a network device, or may be performed by a component (for example, a chip or a circuit) of the network device. This is not limited. For beneficial effect of the fourth aspect, refer to the third aspect.

The method may include: A network device determines that a radio network temporary identifier used to scramble a first downlink control information format includes one of the following: a configured scheduling radio network temporary identifier, a group configured scheduling radio network temporary identifier, or a semi-persistent channel state information radio network temporary identifier, where the first downlink control information format is used to schedule a plurality of cells; the network device determines that a first indicator field in the first downlink control information format can indicate only one cell; and the network device sends the first downlink control information format to a terminal device.

According to a fifth aspect, a cell scheduling method is provided. The method may be performed by a terminal device, or may be performed by a component (for example, a chip or a circuit) of the terminal device. This is not limited.

The method may include: A terminal device receives, from a network device, a downlink control information format scrambled by using a first radio network temporary identifier, where the downlink control information format is used to schedule a plurality of cells; and the terminal device determines, in the plurality of cells, a part of cells corresponding to the first radio network temporary identifier.

With reference to the fifth aspect, in some implementations of the fifth aspect, the downlink control information format includes a third indicator field, and the third indicator field indicates a second radio network temporary identifier. The method further includes: The terminal device determines, in the plurality of cells, a part of cells corresponding to the second radio network temporary identifier.

In the foregoing solution, an indicator field indicating a radio network temporary identifier is newly added to the downlink control information format, and the radio network temporary identifier indicated by the indicator field is different from the radio network temporary identifier used to scramble the downlink control information format. The downlink control information format may perform different scheduling based on the foregoing different radio network temporary identifiers for the plurality of cells. This implements that one downlink control information format schedules a plurality of cells and reduces overheads of the downlink control information format.

With reference to the fifth aspect, in some implementations of the fifth aspect, the plurality of cells include N cells. Further, the plurality of cells are the N cells, the part of cells corresponding to the first radio network temporary identifier are M cells in the N cells, where N≥2 and N is an integer, and 0≤M≤N and M is an integer, 0≤M≤N and M is an integer, or 0≤M≤N and M is an integer. The M cells are indicated by higher layer signaling. Alternatively, the M cells are M cells with largest or smallest cell sequence numbers in the N cells; or when M=1, the M cell is a cell in which the terminal device receives the downlink control information format, that is, a scheduling cell or a scheduling-dominant cell. Alternatively, when M=1, and a cell in which the terminal device receives the downlink control information format, that is, a scheduling cell or a scheduling-dominant cell does not belong to the N cells, the M cell is indicated by higher layer signaling, or the M cell is a cell with a largest or smallest cell sequence number in the N cells, where the higher layer signaling is received by the terminal device from the network device.

With reference to the fifth aspect, in some implementations of the fifth aspect, that the part of cells corresponding to the second radio network temporary identifier are N-M cells includes: The third indicator field indicates, at a cell granularity, the second radio network temporary identifier corresponding to the N-M cells, or the third indicator field indicates, at a cell group granularity, the second radio network temporary identifier of each cell group in the N-M cells.

With reference to the fifth aspect, in some implementations of the fifth aspect, the downlink control information includes a carrier indicator field, the carrier indicator field indicates the plurality of cells, and the carrier indicator field and the third indicator field are jointly coded by the network device.

With reference to the fifth aspect, in some implementations of the fifth aspect, the first radio network temporary identifier indicates one of the following corresponding to the part of cells corresponding to the first radio network temporary identifier: dynamic scheduling of a physical downlink data channel, dynamic scheduling of a physical uplink data channel, activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information. Alternatively, the first radio network temporary identifier is at least one of the following: a cell radio network temporary identifier, a modulation and coding scheme radio network temporary identifier, a configured scheduling radio network temporary identifier, a group configured scheduling radio network temporary identifier, or a semi-persistent channel state information radio network temporary identifier.

According to a sixth aspect, a cell scheduling method is provided. The method may be performed by a network device, or may be performed by a component (for example, a chip or a circuit) of the network device. This is not limited. For beneficial effect of the sixth aspect, refer to the beneficial effect of the fourth aspect. Details are not described herein.

The method may include: A network device scrambles a downlink control information format based on a first radio network temporary identifier, where the downlink control information format is used to schedule a plurality of cells, and the first radio network temporary identifier corresponds to a part of cells in the plurality of cells; and the network device sends the downlink control information format to a terminal device.

With reference to the sixth aspect, in some implementations of the sixth aspect, a third indicator field in the downlink control information format indicates a second radio network temporary identifier, and the second radio network temporary identifier corresponds to a part of cells in the plurality of cells.

With reference to the sixth aspect, in some implementations of the sixth aspect, the part of cells corresponding to the first radio network temporary identifier are M cells in N cells, where N≥2 and N is an integer, and 0≤M≤N and M is an integer, and further, 0≤M≤N and M is an integer, or 0≤M≤N and M is an integer. The M cells are M cells with largest or smallest cell sequence numbers in the N cells. Alternatively, when M=1, the M cell is a cell in which the terminal device receives the downlink control information format, that is, a scheduling cell or a scheduling-dominant cell. Alternatively, the method further includes: The network device sends higher layer signaling to the terminal device, where the higher layer signaling indicates the M cells.

With reference to the sixth aspect, in some implementations of the sixth aspect, the cells corresponding to the second radio network temporary identifier are N-M cells in the N cells, and that a third indicator field in the downlink control information format indicates a second radio network temporary identifier includes: The third indicator field indicates, at a cell granularity, the second radio network temporary identifier corresponding to the N-M cells; or the third indicator field indicates, at a cell group granularity, the second radio network temporary identifier of each cell group in the N-M cells.

With reference to the sixth aspect, in some implementations of the sixth aspect, the downlink control information includes a carrier indicator field, the carrier indicator field indicates the plurality of cells, and the carrier indicator field and the third indicator field are jointly coded by the network device.

With reference to the sixth aspect, in some implementations of the sixth aspect, the first radio network temporary identifier indicates at least one of the following corresponding to the part of cells corresponding to the first radio network temporary identifier: dynamic scheduling of a physical downlink data channel, dynamic scheduling of a physical uplink data channel, activation or deactivation of a semi-persistent scheduling physical downlink data channel, activation or deactivation of a semi-persistent scheduling physical uplink data channel, retransmission of a semi-persistent scheduling physical downlink data channel, retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information. Alternatively, the first radio network temporary identifier is at least one of the following: a cell radio network temporary identifier, a modulation and coding scheme radio network temporary identifier, a configured scheduling radio network temporary identifier, a group configured scheduling radio network temporary identifier, or a semi-persistent channel state information radio network temporary identifier.

According to a seventh aspect, a cell scheduling method is provided. The method may be performed by a terminal device, or may be performed by a component (for example, a chip or a circuit) of the terminal device. This is not limited.

The method may include: A terminal device receives configuration information of a downlink control information format from a network device, where the downlink control information format is used to schedule a plurality of cells; and the terminal device receives the downlink control information format by using a radio network temporary identifier, where the radio network temporary identifier does not include a configured scheduling radio network temporary identifier, a group configured scheduling radio network temporary identifier, or a semi-persistent channel state information radio network temporary identifier, or the radio network temporary identifier does not correspond to activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information.

In the foregoing solution, for a radio network temporary identifier of a non-dynamically scheduled cell, a downlink control information format used to schedule a plurality of cells is not configured, so that overheads of downlink control information can be reduced when dynamic scheduling is performed on a plurality of cells by using downlink control information.

According to an eighth aspect, a cell scheduling method is provided. The method may be performed by a network device, or may be performed by a component (for example, a chip or a circuit) of the network device. This is not limited. For beneficial effect of the eighth aspect, refer to the seventh aspect.

The method may include: A network device sends configuration information of a downlink control information format to a terminal device, where the downlink control information format is used to schedule a plurality of cells; and the network device sends, to the terminal device, the downlink control information format scrambled by using a radio network temporary identifier, where the radio network temporary identifier does not include a configured scheduling radio network temporary identifier, a group configured scheduling radio network temporary identifier, or a semi-persistent channel state information radio network temporary identifier, or the radio network temporary identifier does not correspond to: activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information.

According to a ninth aspect, a cell scheduling method is provided. The method may be performed by a terminal device, or may be performed by a component (for example, a chip or a circuit) of the terminal device. This is not limited.

The method may include: A terminal device receives a downlink control information format from a network device, where the downlink control information includes a first indicator field and a fourth indicator field, and the first indicator field indicates a plurality of cells; and the terminal device determines a fourth cell group in the plurality of cells based on a combination of the first indicator field and the fourth indicator field.

In the foregoing solution, the fourth cell group is determined based on the combination of the first indicator field and the fourth indicator field. When the fourth indicator field is a protocol preset special field, a quantity of bits of first indication information can be reduced, thereby reducing a quantity of bits of the downlink control information format and reducing overheads.

According to a tenth aspect, a cell scheduling method is provided. The method may be performed by a network device, or may be performed by a component (for example, a chip or a circuit) of the network device. This is not limited. For beneficial effect of the tenth aspect, refer to the ninth aspect.

The method may include: A network device determines to indicate a fourth cell group by using a combination of a first indicator field and a fourth indicator field that are included in a downlink control information format, where the first indicator field indicates a plurality of cells, and the plurality of cells include the fourth cell group; and the network device sends the downlink control information format to a terminal device.

According to an eleventh aspect, a communication apparatus is provided. The apparatus is configured to perform the method in any one of the possible implementations of the first aspect to the seventh aspect. Specifically, the apparatus may include units and/or modules configured to perform the method in any one of the possible implementations of the first aspect to the seventh aspect, for example, a processing unit and/or a communication unit.

In an implementation, the apparatus is a communication device (for example, a network device or a terminal device). When the apparatus is the communication device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the communication device (for example, the network device or the terminal device). When the apparatus is a chip, a chip system, or a circuit used in a communication device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a twelfth aspect, a communication apparatus is provided. The apparatus includes at least one processor, configured to execute a computer program or instructions stored in a memory, to perform the method in any one of the possible implementations of the first aspect to the seventh aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a network device or a terminal device).

In another implementation, the apparatus is a chip, a chip system, or a circuit used in the communication device (for example, the network device or the terminal device).

According to a thirteenth aspect, a processor is provided, configured to perform the methods provided in the foregoing aspects.

Sending, obtaining/receiving, and other operations related to the processor may be understood as output, receiving/input, and other operations performed by the processor, or sending and receiving operations performed by a radio frequency circuit and an antenna, unless otherwise specified or the operations conflict with actual functions or internal logic of the operations in related descriptions. This is not limited in this application.

According to a fourteenth aspect, a computer-readable storage medium is provided. The computer-readable medium stores program code executed by user equipment, and the program code is used to perform the method in any one of the possible implementations of the first aspect to the seventh aspect.

According to a fifteenth aspect, a computer program product including instructions is provided. When the computer program product runs on a computer, the computer is enabled to perform the method in any one of the possible implementations of the first aspect to the seventh aspect.

According to a sixteenth aspect, a chip is provided. The chip includes a processor and a communication interface. The processor reads, through the communication interface, instructions stored in a memory, to perform any method in the first aspect to the seventh aspect.

Optionally, in an implementation, the chip may further include the memory. The memory stores the instructions. The processor is configured to execute the instructions stored in the memory. When the instructions are executed, the processor is configured to perform any method in the first aspect to the seventh aspect.

### BRIEF DESCRIPTION OF DRAWINGS

FIG. 1 is a diagram of an architecture of a mobile communication system to which an embodiment of this application is applied;
FIG. 2 is a diagram of a cell scheduling method 100 according to this application;
FIG. 3 is a diagram of a cell scheduling method 100' according to this application;
FIG. 4 is a diagram of a cell scheduling method 200 according to this application;
FIG. 5 is a diagram of a cell scheduling method 300 according to this application;
FIG. 6 is a diagram of an example of a downlink control information format according to this application;
FIG. 7 is a diagram of a cell scheduling method 400 according to this application;
FIG. 8 is a diagram of a cell scheduling method 500 according to this application;
FIG. 9 is a diagram of a cell scheduling apparatus 600 to which this application is applicable;
FIG. 10 is a diagram of another cell scheduling apparatus 700 to which this application is applicable; and
FIG. 11 is a diagram of a chip system 800 to which this application is applicable.

### DESCRIPTION OF EMBODIMENTS

The following describes technical solutions in embodiments of this application with reference to accompanying drawings.

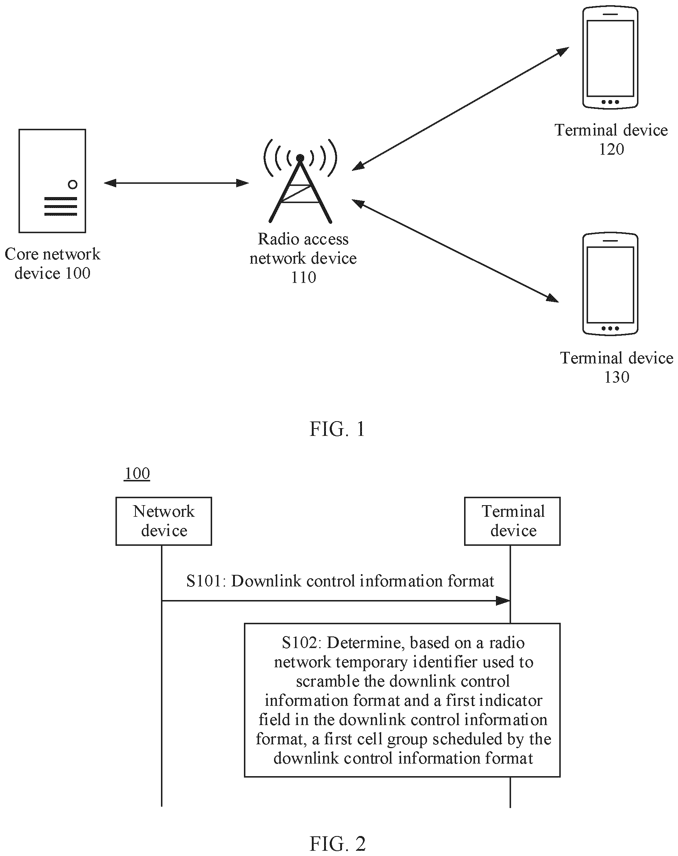

FIG. 1 is a diagram of an architecture of a mobile communication system to which an embodiment of this application is applied. As shown in FIG. 1, the mobile communication system includes a core network device 100, a radio access network device 110, and at least one terminal device (for example, a terminal device 120 and a terminal device 130 in FIG. 1). The terminal device is connected to the radio access network device in a wireless manner, and the radio access network device is connected to the core network device in a wireless or wired manner. The core network device and the radio access network device may be independent and different physical devices, or functions of the core network device and logical functions of the radio access network device are integrated into a same physical device, or some functions of the core network device and some functions of the radio access network device are integrated into one physical device. The terminal device may be located at a fixed position, or may be mobile. FIG. 1 is merely an example diagram. The communication system may further include other network devices, for example, may further include a wireless relay device and a wireless backhaul device, which are not shown in FIG. 1. Quantities of core network devices, radio access network devices, and terminal devices included in the mobile communication system are not limited in this embodiment of this application.

The radio access network device is an access device through which the terminal device accesses the mobile communication system in a wireless manner, and may be a base station NodeB, an evolved base station eNodeB, a base station gNodeB in an NR mobile communication system, a base station in a future mobile communication system, an access node in a Wi-Fi system, or the like. A specific technology and a specific device form that are used by the radio access network device are not limited in this embodiment of this application.

The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device may be deployed on land, including an indoor or outdoor device, a handheld device, or a vehicle-mounted device; or may be deployed on water; or may be deployed on an airplane, a balloon, and a satellite in the air. Application scenarios of the radio access network device and the terminal device are not limited in embodiments of this application.

Embodiments of this application are applicable to downlink signal transmissions, are also applicable to uplink signal transmissions, and are further applicable to device-to-device (device-to-device, D2D) signal transmissions. For the downlink signal transmission, a sending device is the radio access network device, and correspondingly, a receiving device is the terminal device. For the uplink signal transmission, a sending device is the terminal device, and correspondingly, a receiving device is the radio access network device. For the D2D signal transmission, a sending device is a terminal device, and correspondingly, a receiving device is also a terminal device. A signal transmission direction is not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both a licensed spectrum and an unlicensed spectrum. A spectrum below 6 GHz, a spectrum above 6 GHz, or both a spectrum below 6 GHz and a spectrum above 6 GHz may be used for the communication between the radio access network device and the terminal device, and between the terminal devices. Spectrum resources used by the radio access network device and the terminal device are not limited embodiments of this application.

To facilitate understanding of embodiments of this application, the following describes some technical terms in this application.
1. Cell and carrier: A cell is described from a perspective of resource management or mobility management by a higher layer (for example, a protocol layer above a physical layer like a radio resource control layer or a media access control layer). Coverage of each network device may be divided into one or more cells. In a current NR standard, one downlink carrier may be configured for one cell, and optionally, at least one uplink carrier is further configured for one cell. The cell is a general name. For a terminal device, a cell that provides a service for the terminal device is referred to as a serving cell. The cell in this application may alternatively be a serving cell.
2. RNTI

In an NR system, downlink control information (downlink control information, DCI) is appended with cyclic redundancy check (cyclic redundancy check, CRC), and then is sent on a downlink control channel (downlink control channel, PDCCH). The CRC appended to the DCI is scrambled by using a radio network temporary identifier (radio network temporary indicator, RNTI).

There are four types of RNTIs used to scramble the DCI in this application: a cell RNTI (cell-RNTI, C-RNTI), a modulation and coding scheme RNTI (modulation and coding scheme RNTI, MCS-C-RNTI), a configured scheduling RNTI (configured scheduling RNTI, CS-RNTI), and a semi-persistent channel state information RNTI (semi-persistent channel state information RNTI, SP-CSI-RNTI). Both DCI scrambled by using the C-RNTI and DCI scrambled by using the MCS-C-RNTI are used to perform dynamic scheduling of a physical downlink shared channel (physical downlink shared channel, PDSCH)/physical uplink shared channel (physical uplink shared channel, PUSCH). However, a modulation and coding scheme used for data scheduled by the DCI scrambled by using the C-RNTI is different from a modulation and coding scheme used for data scheduled by the DCI scrambled by using the MCS-C-RNTI. The modulation and coding scheme corresponding to the MCS-C-RNTI may indicate a lower code rate. The DCI scrambled by using the CS-RNTI is used for activation/deactivation/a retransmission of a semi-persistent scheduling PDSCH or a configured grant PUSCH transmission. A PDCCH whose CRC is scrambled by using the CS-RNTI or the group configured scheduling RNTI (group configured scheduling RNTI, G-CS-RNTI) and whose carried DCI have special fields set to special values specified in a protocol may indicate activation/deactivation of a semi-persistent scheduling PDSCH or a configured grant PUSCH transmission. The DCI scrambled by using the SP-CSI-RNTI is used to activate/deactivate semi-persistent channel state information reporting carried on the PUSCH. For detailed descriptions of the foregoing four types of RNTIs, refer to the protocol TS38.321.

Currently, PDSCHs of different cells are separately scheduled by different DCI. Similarly, PUSCHs of different cells are also separately scheduled by different DCI. When PDSCHs or PUSCHs of a plurality of cells are scheduled, required overheads of the DCI are excessively high. Therefore, when the PDSCHs or PUSCHs of the plurality of cells need to be scheduled, how to reduce the overheads of the DCI becomes an urgent problem to be resolved.

In view of this, this application provides a solution in which one DCI format schedules a plurality of cells based on an indicator field in a downlink control information format and a radio network temporary identifier, to reduce overheads of the DCI and improve communication efficiency.

With reference to the accompanying drawings, the following describes in detail a cell scheduling method provided in embodiments of this application. Embodiments provided in this application may be applied to the network architecture shown in FIG. 1. This is not limited. All cells in this application may be replaced with carriers. General descriptions are provided herein. Optionally, all cells in a method 100 are cells for transmissions in a same direction. For example, all the cells are cells used for downlink transmissions, or all the cells are cells used for uplink transmissions.

FIG. 2 is a diagram of a cell scheduling method 100 according to this application. Different radio network temporary identifiers correspond to different cell groups (including at least one cell), so that one downlink control information format can schedule a plurality of cells based on a first indicator field in the downlink control information format and the radio network temporary identifier. The method 100 may include the following steps.

S101: A network device sends a downlink control information format to a terminal device, and correspondingly, the terminal device receives the downlink control information format from the network device.

The downlink control information format (DCI format) herein is used to schedule a plurality of cells. The DCI format in this embodiment of this application may also be understood as DCI, or DCI in a DCI format. A plurality of cells may be simultaneously scheduled by this DCI format. General descriptions are provided herein, and details are not described below again.

For scheduling one cell by one DCI format, general descriptions are provided herein, and details are not described below: The DCI format schedules the cell, and the downlink control information format performs at least one of the following scheduling: dynamic scheduling of a transmission of a physical downlink data channel in the cell, dynamic scheduling of a transmission of a physical uplink data channel in the cell, activation or deactivation of a semi-persistent scheduling physical downlink data channel in the cell, activation or deactivation of a semi-persistent scheduling physical uplink data channel in the cell, a retransmission of a semi-persistent scheduling physical downlink data channel in the cell, a retransmission of a semi-persistent scheduling physical uplink data channel in the cell, activation or deactivation of a configured grant physical uplink data channel transmission in the cell, activation or deactivation of a configured grant physical downlink data channel transmission in the cell, a retransmission of a configured grant physical uplink data channel transmission in the cell, a retransmission of a configured grant physical downlink data channel transmission in the cell, or activation or deactivation of semi-persistent channel state information in the cell. One DCI format schedules a plurality of cells. The downlink control information format may perform at least one of the foregoing scheduling on one of the plurality of cells, and may perform same or different types of scheduling on any two different cells in the plurality of cells.

Alternatively, S101 may be that a network device sends a downlink control information format to a terminal device, and correspondingly, the terminal device receives the downlink control information format from the network device. The downlink control information format schedules a first cell group.

S102: The terminal device determines, based on a radio network temporary identifier used to scramble the downlink control information format and a first indicator field in the downlink control information format, the first cell group scheduled by the downlink control information format.

The radio network temporary identifier belongs to one of at least two radio network temporary identifiers. The at least two radio network temporary identifiers correspond to at least two cell groups. Each of the at least two radio network temporary identifiers corresponds to at least one cell group. The first indicator field is used to determine the first cell group in the at least two cell groups.

For example, the first indicator field herein may be a carrier indicator field (carrier indicator field, CIF) or a carrier group indicator field.

Optionally, before S101, the method 100 further includes step 1: The network device determines to scramble the downlink control information format by using the radio network temporary identifier corresponding to the first cell group, where the radio network temporary identifier belongs to one of the at least two radio network temporary identifiers, the at least two radio network temporary identifiers correspond to the at least two cell groups, each of the at least two radio network temporary identifiers corresponds to the at least one cell group, and the first cell group belongs to the at least one cell group corresponding to the radio network temporary identifier; and the network device determines to indicate, by using the first indicator field included in the downlink control information format, the first cell group in the at least one cell group corresponding to the radio network temporary identifier.

Optionally, the method 100 further includes step 2: The network device sends higher layer signaling to the terminal device, and correspondingly, the terminal device receives the higher layer signaling from the network device, where the higher layer signaling indicates a correspondence between each of the at least two radio network temporary identifiers and the at least one cell group.

In an example, the higher layer signaling herein may be a radio resource control (radio resource control, RRC) message or a medium access control-control element (medium access control-control element, MAC-CE) message.

In another example, the correspondence indicates a correspondence between the at least one cell group and the at least two radio network temporary identifiers, any cell group in the at least one cell group corresponds only to one radio network temporary identifier, one radio network temporary identifier may correspond to one or more of N cell groups, and two radio network identifiers may separately correspond to different quantities of cell groups.

The at least two radio network temporary identifiers may include a first identifier and a second identifier.

The first identifier may be understood as one type of identifier, and the second identifier may be understood as another type of identifier.

For example, the first identifier indicates dynamic scheduling corresponding to a first cell, and the second identifier indicates non-dynamic scheduling corresponding to a second cell.

The following provides general descriptions of dynamic scheduling and non-dynamic scheduling in this application. Dynamic scheduling may be understood as scheduling performed by a physical layer downlink control channel or physical layer downlink control information, for example, DCI. Non-dynamic scheduling may be understood as semi-persistent scheduling and periodic scheduling. Scheduling information of semi-persistent scheduling is configured by the network device via RRC signaling, and scheduling corresponding to the scheduling information is activated or deactivated by DCI. Alternatively, one part of the scheduling information of semi-persistent scheduling is configured by the network device via RRC signaling, and the other part is indicated by DCI. In addition, the DCI activates scheduling corresponding to the two parts of scheduling information. In addition, the DCI may be used to deactivate the activated scheduling. Information about the periodic scheduling is configured by the network device via RRC signaling.

Specifically, the first identifier indicates at least one of the following corresponding to the first cell group: dynamic scheduling of a physical downlink data channel or dynamic scheduling of a physical uplink data channel. The second identifier indicates at least one of the following corresponding to the first cell group: activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information.

For example, the first identifier may be an MCS-C-RNTI or a C-RNTI.

For example, the second identifier is a CS-RNTI when the second identifier indicates the activation or deactivation of a semi-persistent scheduling physical downlink data channel, the activation or deactivation of a semi-persistent scheduling physical uplink data channel, the activation or deactivation of a configured grant physical uplink data channel transmission, or the activation or deactivation of a configured grant physical downlink data channel transmission.

For example, the second identifier may be a G-CS-RNTI when the second identifier indicates the retransmission of a semi-persistent scheduling physical downlink data channel, the retransmission of a semi-persistent scheduling physical uplink data channel, the retransmission of a configured grant physical downlink data channel transmission, or the retransmission of a configured grant physical uplink data channel transmission.

For example, the second identifier may be an SP-CSI-RNTI when the second identifier indicates the activation or deactivation of semi-persistent channel state information.

It should be noted that, in an NR system, the physical downlink data channel in this application is a physical downlink shared channel, and a physical uplink data channel in this application is a physical uplink shared channel. General descriptions are provided, and details are not described below again.

Based on different understandings of "a correspondence between each of the at least two radio network temporary identifiers and the at least one cell group", the following provides two possible implementations of S102.

### Implementation 1

In S102, after the radio network temporary identifier used to scramble the downlink control information format is determined, a cell group may be determined based on the first indicator field, and the cell group may be understood as the first cell group. When radio network temporary identifiers used to scramble the downlink control information format are different, cell groups indicated by the first indicator field are different. When the radio network temporary identifiers used to scramble the downlink control information format are different, even if values of the first indicator field are the same, scheduled cells indicated by the first indicator field may be different.

Table 1 shows an example of a correspondence between the first indicator field, the at least two radio network temporary identifiers, and the first cell group. As shown in Table 1, for example, the at least two radio network temporary identifiers are the first identifier and the second identifier. A value #1 to a value #3 are separately possible values of the first indicator field, and a cell group #1 to a cell group #6 are separately possible examples of the first cell group. The cell group #1 to the cell group #3 are examples of at least one cell group corresponding to the first identifier, and the cell group #4 to the cell group #6 are examples of at least one cell group corresponding to the second identifier. The cell group #1 to the cell group #6 are used as examples of the at least two cell groups corresponding to the at least two radio network temporary identifiers.

**Table 1**

| First indicator field | First identifier | Second identifier |
|---|---|---|
| Value #1 | Cell group #1 | Cell group #4 |
| Value #2 | Cell group #2 | Cell group #5 |
| Value #3 | Cell group #3 | Cell group #6 |

Alternatively, Table 1 may be represented in two tables. One table includes a 1^{st} column and a 2^{nd} column of Table 1, and the other table includes the 2^{nd} column and a 3^{rd} column of Table 1. Alternatively, Table 1 may be represented in another form. This is not limited in this application.

It should be noted that Table 1 is merely an example table for ease of understanding this embodiment of this application, and does not limit the correspondence expressed in Table 1. For example, it is not limited that the correspondence can be presented only in a form of mapping table. For example, it is not limited that the at least one cell group includes three cell groups. For example, it is not limited that different identifiers correspond to a same quantity of cell groups. For another example, it is not limited that the first indicator field indicates only one value each time.

The following provides an example in which the first indicator field is used to determine the first cell group in the at least two cell groups.

Example 1-1: In S102, it is assumed that the radio network temporary identifier is the first identifier, and the value of the first indicator field in the downlink control information format is the value #2. In this case, the first cell group determined by the terminal device is the cell group #2. The first indicator field is used to determine the cell group #2 in the cell group #1 to the cell group #6.

Example 1-2: In S102, it is assumed that the radio network temporary identifier used to scramble the downlink control information format is the second identifier, and the value of the first indicator field in the downlink control information format is the value #2, the first cell group determined by the terminal device is the cell group #5. The first indicator field is used to determine the cell group #5 in the cell group #1 to the cell group #6.

For example, when the radio network temporary identifier is the first identifier, the first cell group includes at least one cell. When the radio network temporary identifier is the second identifier, the first cell group is one cell.

Example 2-1: The first indicator field includes K bits, K≥1, and K is an integer. When the radio network temporary identifier is the first identifier, L1 values of the first indicator field respectively correspond to L1 cell groups, each of the L1 cell groups includes at least one cell, the L1 cell groups include the first cell group, and L1 is an integer. When the radio network temporary identifier is the second identifier, L2 values of the first indicator field respectively correspond to L2 cell groups, the L2 cells include the first cell group, and L2 is an integer. Specifically, when L1≥L2, 2^{K-1}<L1≤2^{K} and 1≤L2≤2^{K}; or when L1<L2, 1≤L1<2^{K} and 2^{K-1}<L2≤2^{K}.

Example 2-2: The first indicator field includes 2 bits. When the DCI format is scrambled by using the C-RNTI/MCS-C-RNTI, the value of the first indicator field is 00, indicating to schedule a cell 1 and a cell 2; the value of the first indicator field is 01, indicating to schedule the cell 2 and a cell 3; the value of the first indicator field is 10, indicating to schedule the cell 1 and a cell 4; or the value of the first indicator field is 11, indicating to schedule the cell 1 and the cell 4. When the DCI is scrambled by using the CS-RNTI/G-CS-RNTI/SP-CSI-RNTI, the value of the first indicator field is 00, indicating to schedule the cell 1 and the cell 3; the value of the first indicator field is 01, indicating to schedule the cell 2 and the cell 4; the value of the first indicator field is 10, indicating to schedule the cell 3; or the value of the first indicator field is 11, indicating to schedule the cell 4.

It should be understood that, in Example 2-2, when the radio network temporary identifier is the second identifier, a cell group included in the L2 cell groups may include only one cell, or may include a plurality of cells.

Further, for another example, each of the L1 cell groups includes the at least one cell when the radio network temporary identifier is the first identifier. Each of the L2 cell groups is one cell when the radio network temporary identifier is the second identifier.

Example 2-3: The first indicator field includes 2 bits. When the DCI format is scrambled by using the C-RNTI/MCS-C-RNTI, the value of the first indicator field is 00, indicating to schedule a cell 1 and a cell 2; the value of the first indicator field is 01, indicating to schedule the cell 2 and a cell 3; the value of the first indicator field is 10, indicating to schedule the cell 1 and a cell 4; or the value of the first indicator field is 11, indicating to schedule the cell 2 and the cell 4. When the DCI is scrambled by using the CS-RNTI/G-CS-RNTI/SP-CSI-RNTI, the value of the first indicator field is 00, indicating to schedule a cell 1; the value of the first indicator field is 01, indicating to schedule a cell 2; the value of the first indicator field is 10, indicating to schedule a cell 3; or the value of the first indicator field is 11, indicating to schedule a cell 4.

In the foregoing solution, different radio network temporary identifiers correspond to different cell groups, and each radio network temporary identifier corresponds to at least one cell group. A plurality of cells can be scheduled by one downlink control information format by using a first indicator field in the downlink control information format and the radio network temporary identifier. This reduces overheads of the downlink control information format. In addition, when radio network temporary identifiers are different, the first indicator field in the downlink control information format can indicate different cells by using a same value. On one hand, a same downlink control information format supports different types of scheduling for the plurality of cells. On the other hand, configuration of different indicator fields in the downlink control information format for different radio network temporary identifiers is avoided, thereby further reducing the overheads of the downlink control information format.

### Implementation 2

In S102, the first indicator field is used to determine a second cell group in the at least two cell groups. The terminal device first determines the second cell group based on the first indicator field and the radio network temporary identifier used to scramble the downlink control information format. When the radio network temporary identifier is the first identifier, the first cell group is the second cell group. Alternatively, when the radio network temporary identifier is the second identifier, the second cell group includes the first cell group. In other words, the first cell group is a subset of the second cell group.

For example, as described in S102, the higher layer signaling indicates the correspondence between the at least one cell group and the at least two radio network temporary identifiers. In Implementation 2, the correspondence between the at least one cell group and the at least two radio network temporary identifiers may be understood as that any one cell group in the at least one cell group corresponds to the at least two radio network temporary identifiers, and the at least one cell group includes the second cell group. For example, refer to Table 3.

For example, a correspondence between the second cell group and the first indicator field is indicated by higher layer signaling.

Optionally, in step 1, the downlink control information format further includes a second indicator field, and the network device determines to indicate, by using a combination of the first indicator field and the second indicator field, the first cell group in the at least one cell group corresponding to the radio network temporary identifier.

Table 2 shows an example of a correspondence between the first indicator field, the at least two radio network temporary identifiers, and the first cell group. As shown in Table 2, for example, the at least two radio network temporary identifiers are the first identifier and the second identifier. A value #4 to a value #6 are separately possible values of the first indicator field. A cell group #7 to a cell group #9 are examples of the at least one cell group corresponding to the first identifier, and a subset of the cell group #7 to a subset of the cell group #9 are examples of the at least one cell group corresponding to the second identifier. The cell group #7 to the cell group #9 and the subset of the cell group #7 to the subset of the cell group #9 are used as examples of the at least two cell groups corresponding to the at least two radio network temporary identifiers.

**Table 2**

| First indicator field | First identifier | Second identifier |
|---|---|---|
| Value #4 | Cell group #7 | Subset of the cell group #7 |
| Value #5 | Cell group #8 | Subset of the cell group #8 |
| Value #6 | Cell group #9 | Subset of the cell group #9 |

It should be noted that Table 2 is merely an example table for ease of understanding this embodiment of this application, and does not limit the correspondence expressed in Table 2. For example, it is not limited that the correspondence can be presented only in a form of mapping table. For example, it is not limited that the at least one cell group includes three cell groups. For example, it is not limited that different identifiers correspond to a same quantity of cell groups. For another example, it is not limited that the first indicator field indicates only one value each time.

Example 4: In S102, when the radio network temporary identifier is the first identifier, the terminal device determines, with reference to Table 3, the second cell group (namely, the first cell group) based on the first indicator field and the radio network temporary identifier used to scramble the downlink control information format. When the radio network temporary identifier is the second identifier, the terminal device determines, with reference to Table 3, the second cell group based on the first indicator field and the radio network temporary identifier used to scramble the downlink control information format. With reference to Table 4, the first cell group is determined based on the second cell group and the second indicator field. In other words, when the radio network temporary identifier is the second identifier, the combination of the first indicator field and the second indicator field is used to determine the first cell group in the second cell group.

Table 3 shows an example of the correspondence between the first indicator field, the at least two radio network temporary identifiers, and the second cell group. As shown in Table 3, for example, the at least two radio network temporary identifiers are the first identifier and the second identifier. A value #4 to a value #6 are separately possible values of the first indicator field. A cell group #7 to a cell group #9 are possible examples of the second cell group. For example, it is assumed that the first indicator field is a value #6, the terminal device determines, based on the first indicator field and the radio network temporary identifier used to scramble the downlink control information format, that the second cell group is the cell group #9. When the radio network temporary identifier is the first identifier, the first cell group is the cell group #9.

Table 4 shows an example of a correspondence between the second identifier, the second cell group, the second indicator field, and the first cell group. As shown in Table 4, the cell group #7 to the cell group #9 are second cell groups corresponding to the second identifier, and a subset of the cell group #7 to a subset of the cell group #9 are separately first cell groups determined based on the second cell group and the second indicator field. For example, when the radio network temporary identifier is the second identifier, it is assumed that the value of the first indicator field is the value #6, the terminal device may determine, based on the combination of the first indicator field and the second indicator field, that the first cell group is the subset of the cell group #9.

**Table 3**

| First indicator field | First identifier | Second identifier |
|---|---|---|
| Value #4 | Cell group #7 | |
| Value #5 | Cell group #8 | |
| Value #6 | Cell group #9 | |

**Table 4**

| Second identifier | Second indicator field |
|---|---|
| Cell group #7 | Subset of the cell group #7 |
| Cell group #8 | Subset of the cell group #8 |
| Cell group #9 | Subset of the cell group #9 |

Alternatively, Table 3 and Table 4 may be represented as one table, or may be represented in another form. This is not limited in this application.

It should be noted that Table 3 and Table 4 are merely example tables for ease of understanding this embodiment of this application, and do not limit the correspondences expressed in Table 3 and Table 4. For example, it is not limited that the correspondence can be presented only in a form of mapping table. For example, it is not limited that the at least one cell group includes three cell groups. For example, it is not limited that different identifiers correspond to a same quantity of cell groups. For another example, it is not limited that the first indicator field indicates only one value each time.

It may be understood that the second indicator field is one or more function fields that are in the DCI and that separately correspond to the second cell group. For example, the second indicator field may be an indicator field or an indicator field group. Each second cell group may correspond to one or more function fields. The combination of the first indicator field and the second indicator field may be understood as a combination of the first indicator field and at least one function field corresponding to the second cell group. For example, the first indicator field is a CIF, and the second indicator field is at least one function field corresponding to the cell group #7 to the cell group #9.

For example, the second indicator field may include at least one of the following: a hybrid automatic repeat request (hybrid automatic repeat request, HARQ), a redundancy version (redundancy version, RV), a modulation and coding scheme (modulation and coding scheme, MCS), and frequency domain resource allocation (frequency domain resource allocation, FDRA). Alternatively, the second indicator field may be another indicator field. This is not limited in this application. For example, the second indicator field corresponding to the cell group #7 may be a redundancy version, and the second indicator field corresponding to the cell group #9 may be a HARQ and FDRA. Alternatively, there may be another correspondence. This is not limited in this application.

Example 5: When the second indicator field corresponding to the second cell group meets a preset condition, the combination of the first indicator field and the second indicator field is used to determine the first cell group in the second cell group. It may be understood that, in the second cell group, a cell group corresponding to the second indicator field that meets the preset condition is the first cell group. For example, the subset of the cell group #7 in Table 4 is the first cell group in the cell group #7. For example, the first cell group is a cell group that is in the second cell group and that is scheduled by the downlink control information format. Alternatively, it may be understood that, in the second cell group, a cell group corresponding to the second indicator field that meets the preset condition is a cell other than the first cell group in the second cell group. In other words, a cell group corresponding to the second indicator field that does not meet the preset condition is the first cell group. For example, in Table 4, the first cell group in the cell group #7 is a cell other than the subset of the cell group #7 in Table 4. For example, the first cell group is a cell group that is in the second cell group and that is not scheduled by the downlink control information format.

For example, that the second indicator field meets the preset condition may be understood as that the second indicator field is set to a protocol preset value. It may be understood that the second indicator field includes an indicator subfield corresponding to each cell subgroup in the second cell group. In the second cell group, a cell subgroup corresponding to an indicator subfield that is set to the protocol preset value is the first cell group.

The following provides several possible examples in which the second indicator field is set to the protocol preset value. Table 5 is used as an example. A quantity of HARQ processes and the redundancy version are used as an example of the second indicator field. That the quantity of HARQ processes and the redundancy version are both set to '0' (set to all '0's) or are all set to '0' for an enabled transport block (for the enabled transport block) is used as an example in which the second indicator field is set to the protocol preset value. Table 6 is used as an example. The quantity of HARQ processes, the redundancy version, the modulation and coding scheme, and the frequency domain resource allocation are used as an example of the second indicator field. The quantity of HARQ processes, the redundancy version, the modulation and coding scheme, and the frequency domain resource allocation are respectively set to corresponding values in Table 6, and are used as an example in which the second indicator field is set to the protocol preset value. Alternatively, that the second indicator field is set to the protocol preset value may be represented as another example. This is not limited in this application. A DCI format 0_0/0_1/0_2 is used as an example. All frequency domain resource allocation is set to '0' for an FDRA type 2 with µ=1 (for FDRA Type 2 with µ=1); otherwise, all frequency domain resource allocation is set to 1. A DCI format 0_0/0_1/0_2 is used as an example. For an FDRA type 0 or a dynamic switch (for FDRA Type 0 or for *dynamicSwitch*), all frequency domain resource allocation is set to '0'. Alternatively, for an FDRA type 1 (for FDRA Type 1), all frequency domain resource allocation is set to '1'.

**Table 5**

| | | | |
|---|---|---|---|
| Quantity of HARQ processes | All set to '0' | All set to '0' | All set to '0' |
| Redundancy version | All set to '0' | All set to '0' | For an enabled transport block: all set to '0' |

**Table 6**

| | | |
|---|---|---|
| Quantity of HARQ processes | All set to '0' | All set to '0' |
| Redundancy version | All set to '0' | All set to '0' |
| Modulation and coding scheme | All set to '1' | All set to '1' |
| Frequency domain resource allocation | When µ=1, for the FDRA type 2, all values are set to '0'. | For the FDRA type 0 or the dynamic switch, all values are set to '0'. |
| | Otherwise, all values are set to '1'. | For the FDRA type 1, all values are set to '1'. |

In the foregoing solution, different radio network temporary identifiers correspond to different cell groups, and each radio network temporary identifier corresponds to at least one cell group. A plurality of cells can be scheduled by one downlink control information format by using the first indicator field in the downlink control information format and the radio network temporary identifier. This reduces overheads of the downlink control information format. In addition, when the radio network identifier is the first identifier, the first cell group is determined based on the first indicator field; or when the radio network identifier is the second identifier, the first cell group is determined based on the combination of the first indicator field and the second indicator field. In one aspect, a same downlink control information format supports different types of scheduling for the plurality of cells. In another aspect, when radio network temporary identifiers are different, the first indicator field in the downlink control information format can indicate different cells by using a same value, to further reduce the overheads of the downlink control information format. In addition, when the second indicator field is a protocol preset special field, a quantity of bits of first indication information can be reduced, thereby reducing a quantity of bits of the downlink control information format.

Optionally, in a possible implementation of Implementation 2, the first cell group determined based on the combination of the first indicator field and the second indicator field is a cell group including all cells in the second cell group, or the first cell group determined based on the combination of the first indicator field and the second indicator field includes 0 cells.

For example, when the first cell group is a cell group scheduled by the downlink control information format, and the first cell group determined based on the combination of the first indicator field and the second indicator field includes 0 cells, that is, when no cell group is scheduled by the downlink control information format, the terminal device may determine that the downlink control information format is invalid.

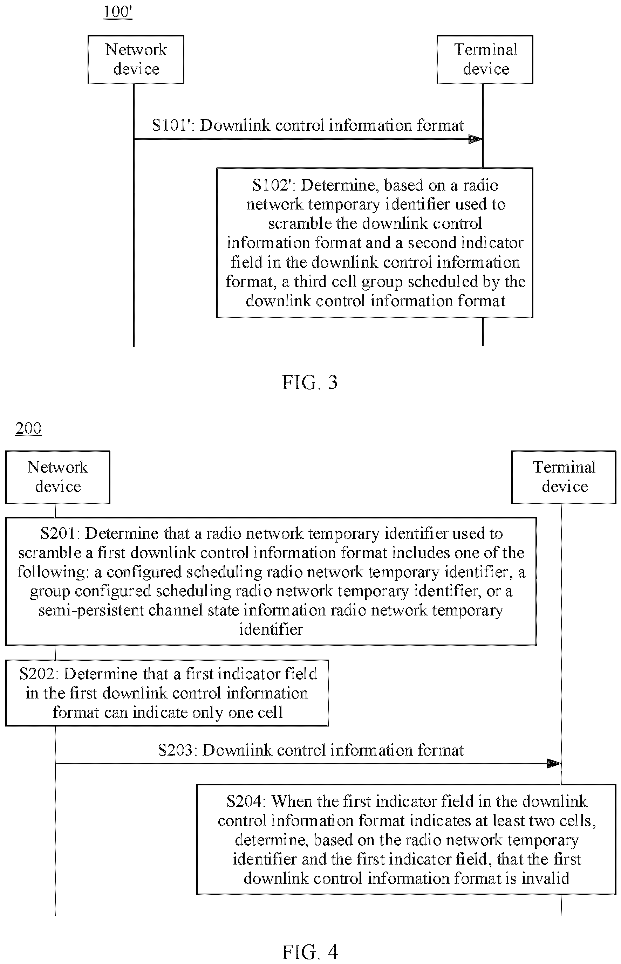

FIG. 3 is a diagram of a cell scheduling method 100' according to this application. Compared with Implementation 2 in the method 100, when the radio network identifier is the second identifier in the method 100, a third cell group may be determined based on the second identifier and the second indicator field without considering information indicated by the first indicator field. For example, the method 100' may be implemented independently, or may be implemented in combination with a case in which the radio network identifier in Implementation 2 of the method 100 is the first identifier in the method 100. This is not limited in this application. The method 100' may include the following steps.

For details of S101', refer to related descriptions of S101.

Optionally, refer to the description of step 1 in Implementation 2 in the method 100. A difference lies in that the first cell group is replaced with the third cell group.

S102': A terminal device determines, based on a radio network temporary identifier used to scramble a downlink control information format and a second indicator field in the downlink control information format, a third cell group scheduled by the downlink control information format.

The radio network temporary identifier used to scramble the downlink control information format is the second identifier in the method 100. For details, refer to related descriptions of the second identifier in the method 100.

In the solution 100', the terminal device does not determine the third cell group based on the first indicator field in the method 100. It may be understood that, it is assumed that the first indicator field indicates at least one cell group, the third cell group may not belong to the at least one cell group.

When the radio network temporary identifier is the first identifier in the method 100, refer to the corresponding descriptions of Implementation 2 in the method 100. A difference lies in that the first cell group in the method 100 needs to be replaced with the third cell group in the method 100'.

When the radio network temporary identifier is the second identifier, the terminal device determines a cell group corresponding to the second indicator field that meets a preset condition as the third cell group. For example, the terminal device determines, in a cell group indicated by higher layer signaling, a cell group corresponding to the second indicator field that meets the preset condition as the third cell group. For that the second indicator field meets the preset condition, refer to the descriptions corresponding to the method 100.

In the foregoing solution, different radio network temporary identifiers correspond to different cell groups, and each radio network temporary identifier corresponds to at least one cell group. A plurality of cells can be scheduled by one downlink control information format by using the first indicator field in the downlink control information format and the radio network temporary identifier. This reduces overheads of the downlink control information format. **In** addition, when the radio network identifier is the first identifier, the first cell group is determined based on the first indicator field; or when the radio network identifier is the second identifier, the first cell group is determined based on the second indicator field, so that a same downlink control information format can support different types of scheduling for a plurality of cells.

FIG. 4 is a diagram of a cell scheduling method 200 according to this application. When a radio network temporary identifier includes a configured scheduling radio network temporary identifier, a group configured scheduling radio network temporary identifier, or a semi-persistent channel state information radio network temporary identifier, only single-cell scheduling can be performed by a first downlink control information format used to schedule a plurality of cells. The method 200 may include the following steps.

S201: A network device determines that a radio network temporary identifier used to scramble the first downlink control information format includes one of the following: the configured scheduling radio network temporary identifier, the group configured scheduling radio network temporary identifier, or the semi-persistent channel state information radio network temporary identifier.

The first downlink control information format is used to schedule the plurality of cells.

S202: The network device determines that a first indicator field in the first downlink control information format can indicate only one cell.

For example, S202 is performed after S201. When the network device determines that the radio network temporary identifier used to scramble the first downlink control information format includes one of the following, the network device determines that the first indicator field in the downlink control information format can indicate only one cell.

S203: The network device sends the first downlink control information format to a terminal device, and correspondingly, the terminal device receives the first downlink control information format from the network device.

S204: When the first indicator field in the first downlink control information format indicates at least two cells, the terminal device determines, based on the radio network temporary identifier and the first indicator field, that the first downlink control information format is invalid.

Alternatively, when the first indicator field in the first downlink control information format indicates more than one cell, the terminal device determines, based on the radio network temporary identifier and the first indicator field, that the first downlink control information format is invalid, and discards the first downlink control information format. In other words, in the method 200, when the radio network temporary identifier includes one of the following: the configured scheduling radio network temporary identifier, the group configured scheduling radio network temporary identifier, or the semi-persistent channel state information radio network temporary identifier, the first indicator field can indicate only one cell. For example, the first indicator field is a CIF, and the CIF can indicate only an ID of a single cell, but cannot indicate IDs of a plurality of cells.

Optionally, when the radio network temporary identifier does not include the configured scheduling radio network temporary identifier, the group configured scheduling radio network temporary identifier, or the semi-persistent channel state information radio network temporary identifier, for example, the radio network temporary identifier includes an MCS-C-RNTI or a C-RNTI, the first indicator field in the first downlink control information format may indicate at least two cells, and the terminal device may determine the at least two cells based on the radio network temporary identifier and the first indicator field. For a specific implementation, refer to a case in which the radio network temporary identifier is the first identifier in the method 100.

In the foregoing solution, when the first downlink control information format that is used to schedule a plurality of cells and that is scrambled by using the configured scheduling radio network temporary identifier, the group configured scheduling radio network temporary identifier, or the semi-persistent channel state information radio network temporary identifier is used, the first downlink control information format does not support scheduling of more than one cell, that is, only one cell can be scheduled. When the first downlink control information format used to schedule a plurality of cells is scrambled by using another radio network temporary identifier, the first downlink control information format supports scheduling of the plurality of cells. Different types of scheduling for a plurality of cells are supported by one downlink control information format by using the first indicator field in the first downlink control information format and the radio network temporary identifier. This reduces overheads of the downlink control information format.

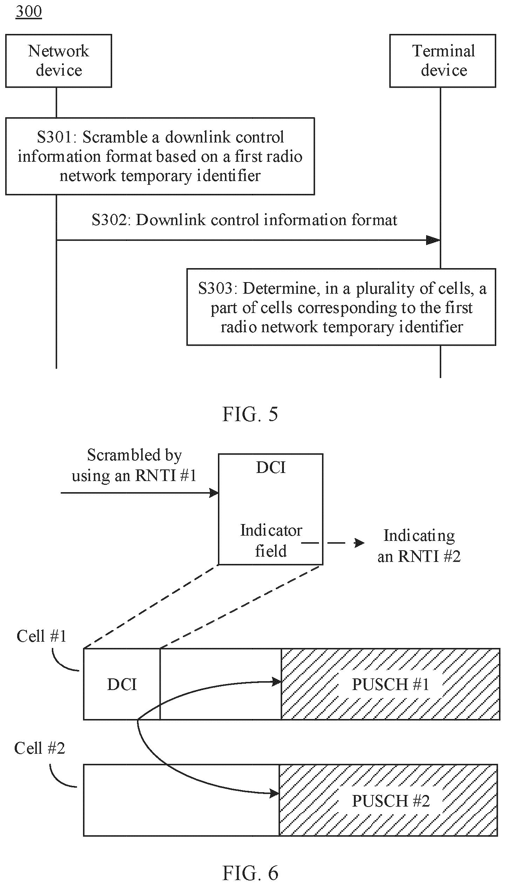

FIG. 5 is a diagram of a cell scheduling method 300 according to this application. An indicator field indicating a radio network temporary identifier is newly added to a downlink control information format, and the radio network temporary identifier indicated by the indicator field may be different from a radio network temporary identifier used to scramble the downlink control information format. The downlink control information format may separately perform different scheduling based on the foregoing different radio network temporary identifiers for a plurality of cells. The method 300 may include the following steps.

S301: A network device scrambles a downlink control information format based on a first radio network temporary identifier.

The downlink control information format is used to schedule a plurality of cells (for example, N cells, where N≥2 and N is an integer), and the first radio network temporary identifier corresponds to a part of cells in the plurality of cells.

That the downlink control information format is used to schedule a cell may be understood as that the downlink control information format dynamically schedules a data transmission of the cell, for example, a physical uplink data transmission or a physical downlink data transmission, or the downlink control information format for physical uplink/downlink data channel activates/deactivates one or more semi-persistent scheduling physical uplink/downlink data channel transmissions in the cell, or the downlink control information format activates/deactivates one or more configured grant physical uplink/downlink data channel transmissions in the cell, or the downlink control information format activates/deactivates one or more semi-persistent CSI transmissions in the cell, or the downlink control information format schedules a retransmission of a configured grant physical uplink/downlink data channel in the cell.

It should be noted that, when the downlink control information format is used to schedule a plurality of cells, one downlink control information format may be used to perform different types of scheduling for the plurality of cells. For example, two cells are scheduled by the downlink control information format, and the downlink control information format may dynamically schedule a data transmission of one cell, and activate a semi-persistent scheduling PDSCH transmission of the other cell.

S302: The network device sends the downlink control information format to a terminal device, and correspondingly, the terminal device receives the downlink control information format from the network device.

S303: The terminal device determines, in the plurality of cells, the part of cells corresponding to the first radio network temporary identifier.

It should be understood that, when the downlink control information format is used to schedule a plurality of cells, the terminal device needs to determine, based on the first radio network temporary identifier, how the downlink control information format schedules the part of cells corresponding to the first radio network temporary identifier. Optionally, the terminal device does not determine, based on the first radio network temporary identifier, how the downlink control information format schedules a cell other than the part of cells corresponding to the first radio network temporary identifier in the plurality of cells. In other words, the first radio network temporary identifier is valid for a part of cells in the plurality of cells, and is invalid for a cell other than the part of cells in the plurality of cells.

For example, the first radio network temporary identifier indicates at least one of the following: dynamic scheduling of a physical downlink data channel, dynamic scheduling of a physical uplink data channel, activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information. The terminal device may determine, based on the first radio network temporary identifier, that the downlink control information format is used to schedule at least one of the foregoing items corresponding to the part of cells corresponding to the first radio network temporary identifier. The following provides several possible examples. For example, the plurality of cells are N cells, and the part of cells corresponding to the first radio network temporary identifier are M cells in the N cells, where N≥2 and N is an integer, and 0≤M≤N and M is an integer, or N≥2 and N is an integer, and 0<M≤N and M is an integer; or N≥2 and N is an integer, and 0≤M≤N and M is an integer; or N≥2 and N is an integer, and 0≤M≤N and M is an integer; or N≥2 and N is an integer, and M=1; or N≥2 and N is an integer, and M=N-1.

Example 1-1: The terminal device determines, based on the first radio network temporary identifier, an MCS table used for data transmitted in any one of the M cells. For example, the first radio network temporary identifier is a C-RNTI or an MCS-C-RNTI. It should be noted that the C-RNTI and the MCS-C-RNTI separately indicate different MCSs.

Example 1-2: The terminal device determines, based on the first radio network temporary identifier, that the downlink control information format activates/deactivates one or more semi-persistent scheduling PDSCHs or configured grant PUSCH transmissions in any one of the M cells. For example, the first radio network temporary identifier is a CS-RNTI or a G-CS-RNTI.

Example 1-3: The terminal device determines, based on the first radio network temporary identifier, that the downlink control information format retransmits the configured grant PUSCH in any one of the M cells. For example, the first radio network temporary identifier is the CS-RNTI or the G-CS-RNTI.

Example 1-4: The terminal device determines, based on the first radio network temporary identifier, that the downlink control information format activates/deactivates one or more semi-persistent CSI transmissions in any one of the M cells. For example, the first radio network temporary identifier is an SPS-CSI-RNTI.

For example, that the terminal device does not determine, based on the first radio network temporary identifier, how the downlink control information format schedules a cell other than the part of cells corresponding to the first radio network temporary identifier in the plurality of cells may be represented as that the terminal device does not schedule N-M cells based on the first radio network temporary identifier.

The part of cells corresponding to the first radio network temporary identifier may be determined in a plurality of manners.

### Manner 1: A case in which M=1

Example 2-1: The M cell is a cell in which DCI used to schedule a plurality of cells is located. In other words, a PDCCH carrying the DCI used to schedule the plurality of cells is sent in the M cell. After determining the M cell, the network device chooses to send the PDCCH in the M cell, and determines the first radio network temporary identifier based on a scheduling requirement of the M cell. The terminal device determines, as the M cell, a cell in which the PDCCH is received.

Example 2-2: A cell with a largest or smallest cell sequence number (cell ID) in the N cells is the M cell. For example, a base station determines the M cell whose cell ID is configured as a largest value in cell IDs of the N cells, and determines the first radio network temporary identifier based on a scheduling requirement of the M cell. The terminal device determines the cell with the largest sequence number in the N cells as the M cell.

Example 2-3: The M cell is one cell indicated by higher layer signaling. The network device indicates one cell by using the higher layer signaling, and the terminal device determines the cell as the M cell.

Example 2-4: If the N cells include a cell in which the DCI used to schedule a plurality of cells is located, refer to Example 2-1; otherwise, refer to Example 2-2.

Example 2-5: If the N cells include a cell in which the DCI used to schedule a plurality of cells is located, refer to Example 2-1; otherwise, refer to Example 2-3.

### Manner 2: A case in which M≥1

Example 3-1: M cells are indicated by higher layer signaling. The network device indicates the M cells by using the higher layer signaling, and the terminal device determines the M cells based on the higher layer signaling.

Example 3-2: The higher layer signaling indicates K cells, K≥M, and K is an integer. The M cells are cells included in both the K cells and the N cells.

Example 3-3: M cells are M cells with largest or smallest cell sequence numbers in the N cells. For example, the M cells with the largest cell sequence numbers in the N cells may be understood as first M cells in the N cells sorted in descending order of cell sequence numbers (or cell identifiers). Similarly, the M cells with the smallest cell sequence numbers in the N cells may be understood as first M cells in the N cells sorted in ascending order of cell sequence numbers (or cell identifiers).

### Manner 3: A case in which M=0

Example 4: The higher layer signaling indicates K cells, K≥M, and K is an integer. The K cells and the N cells do not overlap. For example, the network device indicates, to the terminal device by using the higher layer signaling, that a cell #b is valid. The first indicator field indicates a cell #c, a cell #d, and a cell #e, that is, N=3. The terminal device needs to determine, based on the cells indicated by the higher layer signaling, the part of cells that are in the cells indicated by the first indicator field and that correspond to the first radio network temporary identifier. However, the cells indicated by the higher layer signaling do not overlap the cells indicated by the first indicator field. In this case, a quantity that is of the part of cells corresponding to the first radio network temporary identifier and that is determined by the terminal device is 0, that is, M=0.

In addition, when M≠0, for a case in which the cells indicated by the higher layer signaling overlap the cells indicated by the first indicator field, refer to Example 3-2.

Optionally, in the method 300, the downlink control information format includes a third indicator field indicating a second radio network temporary identifier. S301 further includes: The network device determines that the second radio network temporary identifier corresponds to a part of cells in the plurality of cells. S303 further includes: The terminal device determines, in the plurality of cells, the part of cells corresponding to the second radio network temporary identifier.

It should be noted that there may be one or more second radio network temporary identifiers herein. For example, when the second radio network temporary identifier includes a radio network temporary identifiers (a≥2 and is an integer), the a radio network temporary identifiers may be different from each other. The downlink control information format includes a third indicator fields, and each third indicator field indicates one second radio network temporary identifier. Each third indicator field may correspond to N-M scheduling cells in a positive order or a reverse order of cell IDs.

Example 5: Corresponding to Example 2, when the part of cells corresponding to the first radio network temporary identifier are different from the part of cells corresponding to the second radio network temporary identifier, the part of cells corresponding to the second radio network temporary identifier are N-M cells. For example, the third indicator field indicates, at a cell granularity, the second radio network temporary identifier corresponding to the N-M cells, or the third indicator field indicates, at a cell group granularity, the second radio network temporary identifier of each cell group in the N-M cells.

Example 6: In S303, that the terminal device does not determine, based on the first radio network temporary identifier, how the downlink control information format schedules a cell other than the part of cells corresponding to the first radio network temporary identifier in the plurality of cells may be represented as that the terminal device determines, based on the second radio network temporary identifier, how the downlink control information format schedules the part of cells corresponding to the second radio network temporary identifier. For details, refer to the descriptions of Example 1-1 to Example 1-4. A difference lies in that the first radio network temporary identifier is replaced with the second radio network temporary identifier, and the part of cells corresponding to the first radio network temporary identifier are replaced with the part of cells corresponding to the second radio network temporary identifier, that is, the M cells are replaced with the N-M cells.

For ease of understanding this solution, the following describes an example of the downlink control information format in the method 300 with reference to FIG. 6.

FIG. 6 is a diagram of an example of a downlink control information format according to this application. In FIG. 6, an example in which N=2 and M=1 is used for description. Specifically, the DCI is scrambled by using an RNTI #1, and the DCI includes a third indicator field indicating an RNTI #2. The DCI schedules a PUSCH #1 in a cell #1 and a PUSCH #2 in a cell #2. A cell in which the DCI used to schedule the two cells is located is the cell #1. The PUSCH #1 corresponds to the RNTI #1, and the PUSCH #2 corresponds to the RNTI #2. For example, the RNTI #1 is a C-RNTI, and the RNTI #2 is an MCS-C-RNTI. The terminal device performs a data transmission in the cell #1 based on an MCS indicated by the C-RNTI, and the terminal device performs a data transmission in the cell #2 based on an MCS indicated by the MCS-C-RNTI.

Alternatively, in the method 300, the third indicator field in the downlink control information format does not indicate the second radio network temporary identifier. The third indicator field indicates at least one of the following corresponding to the N-M cells: dynamic scheduling of a physical downlink data channel, dynamic scheduling of a physical uplink data channel, activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information.

In the foregoing solution, an indicator field indicating a radio network temporary identifier is newly added to the downlink control information format, and the radio network temporary identifier indicated by the indicator field is different from the radio network temporary identifier used to scramble the downlink control information format. The downlink control information format may perform different scheduling based on the foregoing different radio network temporary identifiers for the plurality of cells. This implements that one downlink control information format schedules a plurality of cells and reduces overheads of the downlink control information format.

The method 300 is applicable to the plurality of radio network temporary identifiers described in examples 1-1 to 1-4. Because a probability that the downlink control information format schedules a plurality of cells to perform activation/deactivation or a retransmission is low, a solution is proposed in a method 400, to avoid a case in which a radio network temporary identifier used for dynamic scheduling and a radio network temporary identifier not used for dynamic scheduling use a same downlink control information format.

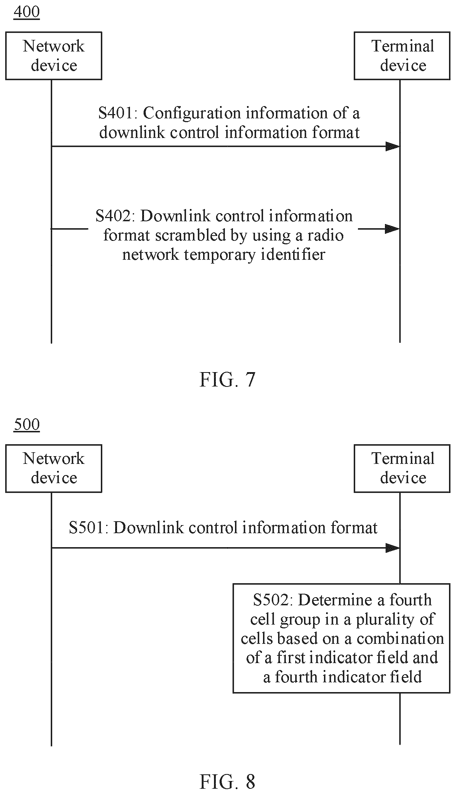

FIG. 7 is a diagram of a cell scheduling method 400 according to this application. A radio network temporary identifier like a CS-RNTI, a G-CS-RNTI, or an SPS-CSI-RNTI that is not used for dynamically scheduling of a cell, can only used for a downlink control information format scheduling a single-cell data transmission. The method 400 may include the following steps.

S401: A network device sends configuration information of a downlink control information format to a terminal device, and correspondingly, the terminal device receives the configuration information of the downlink control information format from the network device.

The downlink control information format is used to schedule a plurality of cells.

S402: The network device sends, to the terminal device, the downlink control information format scrambled by using a radio network temporary identifier, and correspondingly, the terminal device receives the downlink control information format from the network device by using the radio network temporary identifier.

The radio network temporary identifier does not include a configured scheduling radio network temporary identifier, a group configured scheduling radio network temporary identifier, or a semi-persistent channel state information radio network temporary identifier.

In the method 400, for the downlink control information format that can be used to simultaneously schedule a plurality of cells, the terminal device does not use the CS-RNTI, the G-CS-RNTI, or the SP-CSI-RNTI to receive a PDCCH. In other words, the terminal device does not expect the network device to scramble the DCI format by using the CS-RNTI, the G-CS-RNTI, or the SP-CSI-RNTI.

Alternatively, the network device configures downlink SPS/uplink CG/SP-CSI, and also configures the DCI format that can be used to simultaneously schedule the plurality of cells. In the following case, the network device and the terminal device cannot perform data transmissions by using the DCI format that can be used to schedule the plurality of cells, but perform the data transmissions by using a DCI format that can be used to schedule only a single cell. This case includes but is not limited to: The DCI format is used to schedule activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information in the cell.

Optionally, for radio network temporary identifiers (for example, the C-RNTI and the MCS-C-RNTI) used for dynamic scheduling, refer to related descriptions of the method 300.

In the foregoing solution, for a radio network temporary identifier of a non-dynamically scheduled cell, a downlink control information format used to schedule a plurality of cells is not configured, so that overheads of downlink control information can be reduced when dynamic scheduling is performed on a plurality of cells by using downlink control information.

FIG. 8 is a diagram of a cell scheduling method 500 according to this application. The method 500 may include the following steps.

S501: A network device sends a downlink control information format to a terminal device, and correspondingly, the terminal device receives the downlink control information format from the network device.

The downlink control information includes a first indicator field and a fourth indicator field, and the first indicator field indicates a plurality of cells.

Optionally, before S501, the method 500 further includes: The network device determines to indicate a fourth cell group by using a combination of the first indicator field and the fourth indicator field that are included in the downlink control information format, where the first indicator field indicates the plurality of cells, and the plurality of cells include the fourth cell group. Further, the plurality of cells are the fourth cell group.

S502: The terminal device determines the fourth cell group in the plurality of cells based on the combination of the first indicator field and the fourth indicator field.

Example 1: The fourth indicator field is one or more function fields that are in the DCI and that correspond to each of the plurality of cells, and the fourth indicator field may be an indicator field or an indicator field group. The combination of the first indicator field and the fourth indicator field may be understood as a combination of the first indicator field and at least one function field corresponding to each of the at least one cell.

For example, the fourth indicator field may include at least one of the following: a HARQ, an RV, an MCS, and FDRA. Alternatively, the fourth indicator field may be another indicator field. This is not limited in this application.

Example 2: A fourth indicator field corresponding to the fourth cell group in the plurality of cells meets a preset condition, where the fourth cell group includes one or more cells. In this case, the combination of the first indicator field and the fourth indicator field is used to schedule the fourth cell group, and a cell other than the fourth cell group in the plurality of cells is not scheduled; or the combination of the first indicator field and the fourth indicator field is used to schedule a cell other than the fourth cell group in the plurality of cells, and the fourth cell group is not scheduled.

That the fourth indicator field meets the preset condition may be understood as that the fourth indicator field is set to a protocol preset value. It may be understood that the fourth indicator field includes an indicator subfield corresponding to each of the plurality of cells. In the plurality of cells, a cell corresponding to an indicator subfield that is set to the protocol preset value is a cell corresponding to the fourth indicator field that meets the preset condition.

The following provides several possible examples in which the fourth indicator field is set to the protocol preset value. For details, refer to descriptions corresponding to several possible examples in which the second indicator field is set to the protocol preset value in the method 100. A difference lies in that the second indicator field in the method 100 is replaced with the fourth indicator field, and the radio network temporary identifier does not need to be considered in the method 500.

For example, the first indicator field may be a CIF.

In the foregoing solution, the fourth cell group is determined based on the combination of the first indicator field and the fourth indicator field. When the second indicator field is the protocol preset special field, a quantity of bits of first indication information can be reduced, thereby reducing a quantity of bits of the downlink control information format and reducing overheads.

Optionally, before S501, the method 500 further includes: The network device determines to indicate the fourth cell group by using the combination of the first indicator field and the fourth indicator field that are included in the downlink control information format, where the first indicator field indicates the plurality of cells, and the plurality of cells include the fourth cell group.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

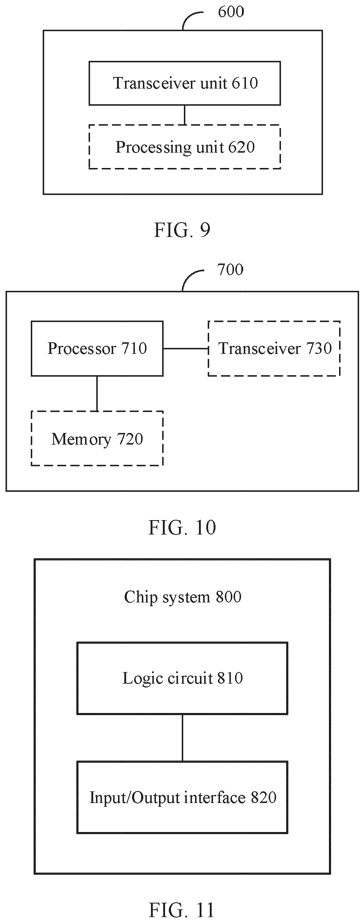

FIG. 9 is a diagram of a cell scheduling apparatus 600 to which this application is applicable. The apparatus 600 includes a transceiver unit 610, and the transceiver unit 610 may be configured to implement a corresponding communication function. The transceiver unit 610 may also be referred to as a communication interface or a communication unit.

Optionally, the apparatus 600 may further include a processing unit 620, and the processing unit 620 may be configured to perform data processing.

Optionally, the apparatus 600 further includes a storage unit. The storage unit may be configured to store instructions and/or data. The processing unit 620 may read the instructions and/or the data in the storage unit, so that the apparatus implements actions performed by the communication device (for example, the terminal device or the network device) in the foregoing method embodiments.

The apparatus 600 may be configured to perform actions performed by the communication device (for example, the terminal device or the network device) in the foregoing method embodiments. In this case, the apparatus 600 may be a component of the communication device (for example, the terminal device or the network device). The transceiver unit 610 is configured to perform receiving and sending-related operations on the communication device (for example, the terminal device or the network device) side in the foregoing method embodiments, and the processing unit 620 is configured to perform processing-related operations on the communication device (for example, the terminal device or the network device) side in the foregoing method embodiments.

In a design, the apparatus 600 is configured to perform actions performed by the terminal device in the foregoing method embodiments.

Specifically, in a possible implementation, the transceiver unit 610 is configured to receive a downlink control information format from a network device and the processing unit 620 is configured to determine, based on a radio network temporary identifier used to scramble the downlink control information format and a first indicator field in the downlink control information format, a first cell group scheduled by the downlink control information format. The radio network temporary identifier belongs to one of at least two radio network temporary identifiers, the at least two radio network temporary identifiers correspond to at least two cell groups. Each of the at least two radio network temporary identifiers corresponds to at least one cell group. The first indicator field is used to determine the first cell group in the at least two cell groups.

Optionally, the transceiver unit 610 is further configured to receive higher layer signaling from the network device, where the higher layer signaling indicates a correspondence between each of the at least two radio network temporary identifiers and the at least one cell group.

Specifically, in another possible implementation, the transceiver unit 610 is configured to receive a first downlink control information format from a network device, where the downlink control information format is used to schedule a plurality of cells, and a radio network temporary identifier used to scramble the first downlink control information format includes one of the following: a configured scheduling radio network temporary identifier, a group configured scheduling radio network temporary identifier, or a semi-persistent channel state information radio network temporary identifier. When a first indicator field in the first downlink control information format indicates at least two cells, the processing unit 620 is configured to determine, based on the first radio network temporary identifier and the first indicator field, that the first downlink control information format is invalid.

Specifically, in another possible implementation, the transceiver unit 610 is configured to receive, from a network device, a downlink control information format scrambled by using a first radio network temporary identifier, where the downlink control information format is used to schedule a plurality of cells; and the processing unit 620 is configured to determine, in the plurality of cells, a part of cells corresponding to the first radio network temporary identifier.

Optionally, the downlink control information format includes a third indicator field, and the third indicator field indicates a second radio network temporary identifier. The processing unit 620 is further configured to determine, in the plurality of cells, a part of cells corresponding to the second radio network temporary identifier.

Specifically, in another possible implementation, the transceiver unit 610 is configured to receive configuration information of a downlink control information format from a network device, where the downlink control information format is used to schedule a plurality of cells. The processing unit 620 is configured to receive the downlink control information format by using a radio network temporary identifier, where the radio network temporary identifier does not include a configured scheduling radio network temporary identifier, a group configured scheduling radio network temporary identifier, or a semi-persistent channel state information radio network temporary identifier.

Specifically, in another possible implementation, the transceiver unit 610 is configured to receive a downlink control information format from a network device, where the downlink control information includes a first indicator field and a fourth indicator field, and the first indicator field indicates a plurality of cells. The processing unit 620 is configured to determine a fourth cell group in the plurality of cells based on a combination of the first indicator field and the fourth indicator field.

It should be understood that a specific process in which the units perform the foregoing corresponding steps is described in detail in the foregoing method embodiments, and for brevity, details are not described herein again.

In another design, the apparatus 600 is configured to perform actions performed by the network device in the foregoing method embodiments.

Specifically, in a possible implementation, the processing unit 620 is configured to scramble a downlink control information format based on a first radio network temporary identifier, where the downlink control information format is used to schedule a plurality of cells, and the first radio network temporary identifier corresponds to a part of cells in the plurality of cells; and the transceiver unit 610 is configured to send the downlink control information format to a terminal device.

Specifically, in another possible implementation, the processing unit 620 is configured to determine to scramble a downlink control information format by using a radio network temporary identifier corresponding to a first cell group, where the radio network temporary identifier belongs to one of at least two radio network temporary identifiers, the at least two radio network temporary identifiers correspond to at least two cell groups, each of the at least two radio network temporary identifiers corresponds to at least one cell group, and the first cell group belongs to the at least one cell group corresponding to the radio network temporary identifier. The processing unit 620 is further configured to determine to indicate, by using a first indicator field included in the downlink control information format, the first cell group in the at least one cell group corresponding to the radio network temporary identifier. The transceiver unit 610 is configured to send the downlink control information format to a terminal device.

Optionally, the transceiver unit 610 is configured to send higher layer signaling to the terminal device, where the higher layer signaling indicates a correspondence between each of the at least two radio network temporary identifiers and the at least one cell group.

Optionally, the processing unit 620 is specifically configured to determine to indicate, by using a combination of the first indicator field and the second indicator field, the first cell group in the at least one cell group corresponding to the radio network temporary identifier.

Specifically, in another possible implementation, the processing unit 620 is configured to determine that a radio network temporary identifier used to scramble a first downlink control information format includes one of the following: a configured scheduling radio network temporary identifier, a group configured scheduling radio network temporary identifier, or a semi-persistent channel state information radio network temporary identifier, where the first downlink control information format is used to schedule a plurality of cells. The processing unit 620 is further configured to determine that a first indicator field in the first downlink control information format can indicate only one cell. The transceiver unit 610 is configured to send the first downlink control information format to a terminal device.

Specifically, in another possible implementation, the transceiver unit 610 is configured to send configuration information of a downlink control information format to a terminal device, where the downlink control information format is used to schedule a plurality of cells. The transceiver unit 610 is further configured to send, to the terminal device, the downlink control information format scrambled by using a radio network temporary identifier, where the radio network temporary identifier does not include a configured scheduling radio network temporary identifier, a group configured scheduling radio network temporary identifier, or a semi-persistent channel state information radio network temporary identifier.

Specifically, in another possible implementation, the processing unit 620 is configured to determine to indicate a fourth cell group by using a combination of a first indicator field and a fourth indicator field that are included in a downlink control information format, where the first indicator field indicates a plurality of cells, and the plurality of cells include the fourth cell group. The transceiver unit 610 is configured to send the downlink control information format to a terminal device.

It should be understood that a specific process in which the units perform the foregoing corresponding steps is described in detail in the foregoing method embodiments, and for brevity, details are not described herein again.

It should be further understood that, the apparatus 600 herein is presented in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the terminal device in the foregoing embodiments, and may be configured to perform procedures and/or steps corresponding to the terminal device in the foregoing method embodiments; or the apparatus 600 may be specifically the network device in the foregoing embodiments, and may be configured to perform procedures and/or steps corresponding to the network device in the foregoing method embodiments. To avoid repetition, details are not described herein again.

The apparatus 600 in each of the foregoing solutions has functions of implementing the corresponding steps performed by the terminal device in the foregoing methods, or the apparatus 600 in each of the foregoing solutions has functions of implementing the corresponding steps performed by the network device in the foregoing methods. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving-sending operations and a related processing operation in the method embodiments.

In addition, the transceiver unit 610 may alternatively be a transceiver circuit (which may include, for example, a receiving circuit and a sending circuit), and the processing unit may be a processing circuit.

It should be noted that the apparatus in FIG. 9 may be the network element or the device in the foregoing embodiments, or may be a chip or a chip system, for example, a system-on-a-chip (system-on-a-chip, SoC). The transceiver unit may be an input/output circuit and/or a communication interface. The processing unit is an integrated processor, a microprocessor, or an integrated circuit on the chip. This is not limited herein.

FIG. 10 is a diagram of another cell scheduling apparatus 700 to which this application is applicable. The apparatus 700 includes a processor 710. The processor 710 is coupled to a memory 720, the memory 720 is configured to store a computer program or instructions and/or data, and the processor 710 is configured to execute the computer program or the instructions stored in the memory 720, or read the data stored in the memory 720, to perform the method in the foregoing method embodiments.

Optionally, there are one or more processors 710.

Optionally, there are one or more memories 720.

Optionally, the memory 720 and the processor 710 are integrated together, or are disposed separately.

Optionally, as shown in FIG. 10, the apparatus 700 may further include a transceiver 730. The transceiver 730 is configured to receive and/or send signals. For example, the processor 710 is configured to control the transceiver 730 to receive and/or send the signal.

In a solution, the apparatus 700 is configured to implement operations performed by the terminal device in the foregoing method embodiments.

For example, the processor 710 is configured to execute the computer program or the instructions stored in the memory 720, to implement related operations of the terminal device in the foregoing method embodiments, for example, the method performed by the terminal device or the UE in the embodiment shown in any one of FIG. 2 to FIG. 8.

In a solution, the apparatus 700 is configured to implement operations performed by the network device in the foregoing method embodiments.

For example, the processor 710 is configured to execute the computer program or the instructions stored in the memory 720, to implement related operations of the network device in the foregoing method embodiments, for example, the method performed by the network device or the base station in the embodiment shown in any one of FIG. 2 to FIG. 8.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another appropriate type.

FIG. 11 is a diagram of a chip system 800 to which this application is applicable. The chip system 800 (or may be referred to as a processing system) includes a logic circuit 810 and an input/output interface (input/output interface) 820.

The logic circuit 810 may be a processing circuit in the chip system 800. The logic circuit 810 may be coupled to a storage unit, and invoke instructions in the storage unit, so that the chip system 800 can implement the methods and functions in embodiments of this application. The input/output interface 820 may be an input/output circuit in the chip system 800, and outputs information processed by the chip system 800, or inputs to-be-processed data or signaling information to the chip system 800 for processing.

Specifically, for example, if the chip system 800 is installed on the terminal device, the logic circuit 810 is coupled to the input/output interface 820, and the logic circuit 810 may send a message to the network device through the input/output interface 820. The message may be generated by the logic circuit 810. Alternatively, the input/output interface 820 may input a message from the network device to the logic circuit 810 for processing. For another example, if the chip system 800 is installed in the network device, the logic circuit 810 is coupled to the input/output interface 820, and the logic circuit 810 may send a message to the terminal device through the input/output interface 820. The message may be generated by the logic circuit 810. Alternatively, the input/output interface 820 may input a message from the terminal device to the logic circuit 810 for processing.

In a solution, the chip system 800 is configured to implement operations performed by the terminal device in the foregoing method embodiments.

For example, the logic circuit 810 is configured to implement processing-related operations performed by the terminal device in the foregoing method embodiments, for example, processing-related operations performed by the terminal device or the UE in the embodiment shown in any one of FIG. 2 to FIG. 8. The input/output interface 820 is configured to implement sending-and/or receiving-related operations performed by the terminal device in the foregoing method embodiments, for example, sending-and/or receiving-related operations performed by the terminal device or the UE in the embodiment shown in any one of FIG. 2 to FIG. 8.

In another solution, the chip system 800 is configured to implement operations performed by the network device in the foregoing method embodiments.

For example, the logic circuit 810 is configured to implement processing-related operations performed by the network device in the foregoing method embodiments, for example, processing-related operations performed by the network device or the base station in the embodiment shown in any one of FIG. 2 to FIG. 8. The input/output interface 820 is configured to implement sending- and/or receiving-related operations performed by the network device in the foregoing method embodiments, for example, sending-and/or receiving-related operations performed by the network device or the base station in the embodiment shown in any one of FIG. 2 to FIG. 8.

Embodiments of this application further provide a computer-readable storage medium, where the computer-readable storage medium stores computer instructions used to implement the method performed by the terminal device or the network device in the foregoing method embodiments.

For example, when the computer program is executed by a computer, the computer is enabled to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device and the network device in the foregoing embodiments. For example, the system includes the terminal device and the network device in the embodiment shown in any one of FIG. 2 to FIG. 8.

For explanations and beneficial effect of related content of any one of the apparatuses provided above, refer to the corresponding method embodiment provided above. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the foregoing usable medium may include but is not limited to any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell scheduling method, comprising:
receiving, by a terminal device, a downlink control information format from a network device; and
determining, by the terminal device based on a radio network temporary identifier used to scramble the downlink control information format and a first indicator field in the downlink control information format, a first cell group scheduled by the downlink control information format, wherein the radio network temporary identifier used to scramble the downlink control information format belongs to one of at least two radio network temporary identifiers, the at least two radio network temporary identifiers correspond to at least two cell groups, each of the at least two radio network temporary identifiers corresponds to at least one cell group, and the first indicator field is used to determine the first cell group in the at least two cell groups.

2. The method according to claim 1, wherein the at least two radio network temporary identifiers comprise a first identifier and a second identifier;
the first identifier indicates at least one of the following corresponding to the first cell group: dynamic scheduling of a physical downlink data channel or dynamic scheduling of a physical uplink data channel; and
the second identifier indicates at least one of the following corresponding to the first cell group: activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information.

3. The method according to claim 2, wherein
the first cell group comprises at least one cell when the radio network temporary identifier used to scramble the downlink control information format is the first identifier; or
the first cell group is one cell when the radio network temporary identifier used to scramble the downlink control information format is the second identifier.

4. The method according to claim 2, wherein
the first indicator field comprises K bits, K≥1, and K is an integer; and
when the radio network temporary identifier used to scramble the downlink control information format is the first identifier, L1 values of the first indicator field respectively correspond to L1 cell groups, each of the L1 cell groups comprises at least one cell, the L1 cell groups comprise the first cell group, and L1 is an integer; or
when the radio network temporary identifier used to scramble the downlink control information format is the second identifier, L2 values of the first indicator field respectively correspond to L2 cell groups, and the L2 cell groups comprise the first cell group, and L2 is an integer, wherein
when L1≥L2, 2^{K-1}<L1≤2^{K}, and 1≤L2≤2^{K}; or
when L1<L2, 1≤L1<2^{K}, and 2^{K-1}<L2≤2^{K}.

5. The method according to claim 4, wherein
each of the L1 cell groups comprises the at least one cell when the radio network temporary identifier used to scramble the downlink control information format is the first identifier; or
each of the L2 cell groups is one cell when the radio network temporary identifier used to scramble the downlink control information format is the second identifier.

6. The method according to claim 2 or 3, wherein
that the first indicator field is used to determine the first cell group in the at least two cell groups comprises:
the first indicator field is used to determine a second cell group in the at least two cell groups, and a correspondence between the second cell group and the first indicator field is indicated by higher layer signaling; and
the first cell group is the second cell group when the radio network temporary identifier used to scramble the downlink control information format is the first identifier; or
the second cell group comprises the first cell group when the radio network temporary identifier used to scramble the downlink control information format is the second identifier.

7. The method according to claim 6, wherein the downlink control information format further comprises a second indicator field, and when the radio network temporary identifier used to scramble the downlink control information format is the second identifier,
that the first indicator field is used to determine the first cell group in the at least two cell groups comprises:
a combination of the first indicator field and the second indicator field is used to determine the first cell group in the second cell group.

8. The method according to any one of claims 1 to 7, wherein the method further comprises:
receiving, by the terminal device, higher layer signaling from the network device, wherein the higher layer signaling indicates a correspondence between each of the at least two radio network temporary identifiers and the at least one cell group.

9. A cell scheduling method, comprising:
determining, by a network device, to scramble a downlink control information format by using a radio network temporary identifier corresponding to a first cell group, wherein the radio network temporary identifier used to scramble the downlink control information format belongs to one of at least two radio network temporary identifiers, the at least two radio network temporary identifiers correspond to at least two cell groups, each of the at least two radio network temporary identifiers corresponds to at least one cell group, and the first cell group belongs to the at least one cell group corresponding to the radio network temporary identifier used to scramble the downlink control information format;
determining, by the network device, to indicate, by using a first indicator field comprised in the downlink control information format, the first cell group in the at least one cell group corresponding to the radio network temporary identifier used to scramble the downlink control information format; and
sending, by the network device, the downlink control information format to a terminal device.

10. The method according to claim 9, wherein the method further comprises:
sending, by the network device, higher layer signaling to the terminal device, wherein the higher layer signaling indicates a correspondence between each of the at least two radio network temporary identifiers and the at least one cell group.

11. The method according to claim 9 or 10, wherein the downlink control information format further comprises a second indicator field, and the determining, by the network device, to indicate, by using a first indicator field comprised in the downlink control information format, the first cell group in the at least one cell group corresponding to the radio network temporary identifier used to scramble the downlink control information format comprises:
determining, by the network device, to indicate, by using a combination of the first indicator field and the second indicator field, the first cell group in the at least one cell group corresponding to the radio network temporary identifier used to scramble the downlink control information format.

12. A cell scheduling method, comprising:
receiving, by a terminal device, a first downlink control information format from a network device, wherein the first downlink control information format is used to schedule a plurality of cells;
a radio network temporary identifier used to scramble the first downlink control information format comprises one of the following: a configured scheduling radio network temporary identifier, a group configured scheduling radio network temporary identifier, or a semi-persistent channel state information radio network temporary identifier; and
when a first indicator field in the first downlink control information format indicates at least two cells, determining, by the terminal device based on the radio network temporary identifier and the first indicator field, that the first downlink control information format is invalid.

13. A cell scheduling method, comprising:
determining, by a network device, that a radio network temporary identifier used to scramble a first downlink control information format comprises one of the following: a configured scheduling radio network temporary identifier, a group configured scheduling radio network temporary identifier, or a semi-persistent channel state information radio network temporary identifier, wherein the first downlink control information format is used to schedule a plurality of cells;
determining, by the network device, that a first indicator field in the first downlink control information format is capable of indicating only one cell; and
sending, by the network device, the first downlink control information format to a terminal device.

14. A cell scheduling method, comprising:
receiving, by a terminal device from a network device, a downlink control information format scrambled by using a first radio network temporary identifier, wherein the downlink control information format is used to schedule a plurality of cells; and
determining, by the terminal device in the plurality of cells, a part of cells corresponding to the first radio network temporary identifier.

15. The method according to claim 14, wherein the downlink control information format comprises a third indicator field, the third indicator field indicates a second radio network temporary identifier, and the method further comprises:
determining, by the terminal device in the plurality of cells, a part of cells corresponding to the second radio network temporary identifier.

16. The method according to claim 15, wherein
the plurality of cells comprise N cells, and the part of cells corresponding to the first radio network temporary identifier are M cells in the N cells, wherein N≥2 and N is an integer, and 0≤M≤N and M is an integer; and
the M cells are indicated by higher layer signaling; or
the M cells are M cells with largest or smallest cell sequence numbers in the N cells; or
when M=1, the M cell is a cell in which the terminal device receives the downlink control information format; or
when M=1, and a cell in which the terminal device receives the downlink control information format does not belong to the N cells, the M cell is indicated by higher layer signaling, or the M cell is a cell with a largest or smallest cell sequence number in the N cells, wherein
the higher layer signaling is received by the terminal device from the network device.

17. The method according to claim 15 or 16, wherein that the part of cells corresponding to the second radio network temporary identifier are N-M cells comprises:
the third indicator field indicates, at a cell granularity, the second radio network temporary identifier corresponding to the N-M cells; or
the third indicator field indicates, at a cell group granularity, the second radio network temporary identifier of each cell group in the N-M cells.

18. The method according to any one of claims 15 to 17, wherein the downlink control information comprises a carrier indicator field, the carrier indicator field indicates the plurality of cells, and the carrier indicator field and the third indicator field are jointly coded by the network device.

19. The method according to any one of claims 15 to 18, wherein
the first radio network temporary identifier indicates one of the following corresponding to the part of cells corresponding to the first radio network temporary identifier: dynamic scheduling of a physical downlink data channel, dynamic scheduling of a physical uplink data channel, activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information.

20. A cell scheduling method, comprising:
scrambling, by a network device, a downlink control information format based on a first radio network temporary identifier, wherein the downlink control information format is used to schedule a plurality of cells, and the first radio network temporary identifier corresponds to a part of cells in the plurality of cells; and
sending, by the network device, the downlink control information format to a terminal device.

21. The method according to claim 20, wherein a third indicator field in the downlink control information format indicates a second radio network temporary identifier, and the second radio network temporary identifier corresponds to a part of cells in the plurality of cells.

22. The method according to claim 20 or 21, wherein the plurality of cells comprise N cells, and the part of cells corresponding to the first radio network temporary identifier are M cells in the N cells, wherein N≥2 and N is an integer, and 0≤M≤N and M is an integer; and
the M cells are M cells with largest or smallest cell sequence numbers in the N cells; or
when M=1, the M cell is a cell in which the terminal device receives the downlink control information format; or
the method further comprises: sending, by the network device, higher layer signaling to the terminal device, wherein the higher layer signaling indicates the M cells.

23. The method according to claim 22, wherein the cells corresponding to the second radio network temporary identifier are N-M cells in the N cells, and
that a third indicator field in the downlink control information format indicates a second radio network temporary identifier comprises:
the third indicator field indicates, at a cell granularity, the second radio network temporary identifier corresponding to the N-M cells; or
the third indicator field indicates, at a cell group granularity, the second radio network temporary identifier of each cell group in the N-M cells.

24. The method according to any one of claims 20 to 23, wherein
the downlink control information comprises a carrier indicator field, and the carrier indicator field indicates the plurality of cells; and
the carrier indicator field and the third indicator field are jointly coded by the network device.

25. The method according to any one of claims 20 to 24, wherein
the first radio network temporary identifier indicates at least one of the following corresponding to the part of cells corresponding to the first radio network temporary identifier: dynamic scheduling of a physical downlink data channel, dynamic scheduling of a physical uplink data channel, activation or deactivation of a semi-persistent scheduling physical downlink data channel, activation or deactivation of a semi-persistent scheduling physical uplink data channel, a retransmission of a semi-persistent scheduling physical downlink data channel, a retransmission of a semi-persistent scheduling physical uplink data channel, activation or deactivation of a configured grant physical uplink data channel transmission, activation or deactivation of a configured grant physical downlink data channel transmission, a retransmission of a configured grant physical uplink data channel transmission, a retransmission of a configured grant physical downlink data channel transmission, or activation or deactivation of semi-persistent channel state information.

26. A cell scheduling method, comprising:
receiving, by a terminal device, configuration information of a downlink control information format from a network device, wherein the downlink control information format is used to schedule a plurality of cells; and
receiving, by the terminal device, the downlink control information format by using a radio network temporary identifier, wherein the radio network temporary identifier does not comprise a configured scheduling radio network temporary identifier, a group configured scheduling radio network temporary identifier, or a semi-persistent channel state information radio network temporary identifier.

27. A cell scheduling method, comprising:
sending, by a network device, configuration information of a downlink control information format to a terminal device, wherein the downlink control information format is used to schedule a plurality of cells; and
sending, by the network device to the terminal device, the downlink control information format scrambled by using a radio network temporary identifier, wherein the radio network temporary identifier does not comprise a configured scheduling radio network temporary identifier, a group configured scheduling radio network temporary identifier, or a semi-persistent channel state information radio network temporary identifier.

28. A cell scheduling method, comprising:
receiving, by a terminal device, a downlink control information format from a network device, wherein the downlink control information comprises a first indicator field and a fourth indicator field, and the first indicator field indicates a plurality of cells; and
determining, by the terminal device, a fourth cell group in the plurality of cells based on a combination of the first indicator field and the fourth indicator field.

29. A cell scheduling method, comprising:
determining, by a network device, to indicate a fourth cell group by using a combination of a first indicator field and a fourth indicator field that are comprised in a downlink control information format, wherein the first indicator field indicates a plurality of cells, and the plurality of cells comprise the fourth cell group; and
sending, by the network device, the downlink control information format to a terminal device.

30. A cell scheduling apparatus, comprising:
a module, configured to implement the method according to any one of claims 1 to 8; or
a module, configured to implement the method according to any one of claims 9 to 11; or
a module, configured to implement the method according to claim 12, 13, 26, 27, 28, or 29; or
a module, configured to implement the method according to any one of claims 14 to 19; or
a module configured to implement the method according to any one of claims 20 to 25.

31. A cell scheduling apparatus, comprising:
a processor and a memory, wherein
the memory is configured to store a computer program; and
the processor is configured to execute the computer program stored in the memory, to enable the communication apparatus to perform the communication method according to any one of claims 1 to 8, or to enable the communication apparatus to perform the communication method according to any one of claims 9 to 11, or to enable the communication apparatus to perform the communication method according to claim 12, 13, 26, 27, 28, or 29, or to enable the communication apparatus to perform the communication method according to any one of claims 14 to 19, or to enable the communication apparatus to perform the communication method according to any one of claims 20 to 25.

32. A computer-readable storage medium, wherein the computer-readable storage medium stores instructions, and when the computer instructions are run on a computer, the computer is enabled to perform the method according to any one of claims 1 to 8, or the computer is enabled to perform the method according to any one of claims 9 to 11, or perform the method according to claim 12, 13, 26, 27, 28, or 29, or perform the method according to any one of claims 14 to 19, or perform the method according to any one of claims 20 to 25.

33. A chip, comprising:
a memory, configured to store a computer program; and
a processor, configured to read and execute the computer program stored in the memory, wherein when the computer program is executed, the processor performs the method according to any one of claims 1 to 8, or the processor performs the method according to any one of claims 9 to 11, or performs the method according to claim 12, 13, 26, 27, 28, or 29, or performs the method according to any one of claims 14 to 19, or performs the method according to any one of claims 20 to 25.

34. A computer program product, wherein the computer program product comprises computer program code, and when the computer program code is run on a computer, the computer is enabled to perform the method according to any one of claims 1 to 8, or the computer is enabled to perform the method according to any one of claims 9 to 11, or perform the method according to claim 12, 13, 26, 27, 28, or 29, or perform the method according to any one of claims 14 to 19, or perform the method according to any one of claims 20 to 25.
